# FASCICULE DE BREVET EUROPEEN

(11) **EP 4 639 126 B1**
(45) Date de publication et mention de la délivrance du brevet: **25.11.2026**
(21) Numéro de dépôt: 23833623.4
(22) Date de dépôt: 13.12.2023
(51) Int. Cl.: G01M 3/32, B29C 43/12, B29D 30/06, B29C 43/58, B29C 43/10, B29C 43/52, B29C 43/36

(54) **PROCÉDÉ DE DÉTECTION DE FUITE AVEC TEMPORISATION PERMETTANT DE DÉTECTER UNE FUITE QUI AFFECTE UNE MEMBRANE DE CUISSON DE BANDAGE OU LE CIRCUIT DE GONFLAGE DE LADITE MEMBRANE**
LECKDETEKTIONSVERFAHREN MIT ZEITVERZÖGERUNG ZUR DETEKTION EINES LECKS, DAS AUF EINE REIFENHÄRTUNGSMEMBRAN ODER DEN AUFBLASSCHALTKREIS DAFÜR WIRKT
LEAK DETECTION METHOD WITH TIME DELAY FOR DETECTING A LEAK THAT AFFECTS A TYRE CURING MEMBRANE OR THE INFLATION CIRCUIT THEREOF

(30) Priorité: 22.12.2022 FR 2214214
(43) Date de publication de la demande: 29.10.2025
(73) Titulaire: COMPAGNIE GENERALE DES ETABLISSEMENTS MICHELIN, 63000 Clermont-Ferrand (FR)
(72) Inventeur: CHAMBONNIERE, Benoit, 63040 CLERMONT-FERRAND CEDEX 09 (FR); BINDA, Yann, 63040 CLERMONT-FERRAND CEDEX 09 (FR); BAUBIAT, Sébastien, 63040 CLERMONT-FERRAND CEDEX 09 (FR); MOREY, Julien, 63040 CLERMONT-FERRAND CEDEX 09 (FR)
(74) Mandataire: M.F.P. Michelin
(86) Numéro de dépôt international: PCT/EP2023/085552
(87) Numéro de publication internationale: WO 2024/132762

(56) Documents cités:
- JP-A- 2019 214 158
- US-A1- 2006 037 382
- US-A1- 2013 087 940

## Description

La présente invention concerne le domaine de la fabrication des bandages destinés à équiper des roues de véhicules, notamment des bandages pneumatiques.

Elle concerne plus particulièrement le domaine de l'opération de cuisson des bandages, qui permet de conférer son aspect définitif à un bandage, notamment en conformant les sculptures de la bande de roulement dudit bandage, et de vulcaniser ledit bandage.

Il est connu, pour réaliser cette opération de cuisson, de placer une ébauche de bandage, ou « bandage cru », non vulcanisé, ou à tout le moins non entièrement vulcanisé, dans un moule de cuisson dont la paroi interne correspond à l'empreinte en négatif du bandage que l'on souhaite obtenir, puis de refermer ledit moule de cuisson, puis de forcer l'expansion d'une membrane de cuisson élastique, située à l'intérieur du moule, entre les bourrelets du bandage, au moyen d'un fluide de gonflage sous pression, tel que de la vapeur d'eau, de telle manière que la surface externe de ladite membrane de cuisson vient en appui contre la surface interne du bandage et presse ce dernier contre la paroi interne du moule. La chaleur apportée par le moule et par le fluide de gonflage permet la vulcanisation du bandage. Après l'opération de cuisson, la membrane est dégonflée, le moule est ouvert, et le bandage cuit extrait pour être remplacé par un nouveau bandage cru, en vue d'une nouvelle opération de cuisson.

Les conditions thermiques et mécaniques de l'utilisation répétée de la membrane de cuisson sont particulièrement sévères, et sont donc à l'origine d'un endommagement de la membrane de cuisson, notamment par l'apparition de perforations qui provoquent une perte d'étanchéité de la membrane de cuisson, et qui peuvent être, dans certains cas, à l'origine d'une déchirure de ladite membrane de cuisson au cours d'une opération de cuisson.

Bien entendu, une telle défaillance de la membrane de cuisson conduit généralement à la mise au rebut du bandage, soit parce que ledit bandage aura été insuffisamment cuit en raison de l'interruption de l'opération de cuisson, soit parce que ledit bandage aura été mal conformé du fait de l'impossibilité de mettre la membrane sous pression, soit encore parce que ledit bandage aura été endommagé et donc fragilisé par une intrusion du fluide de gonflage qui aura fui hors de la membrane de cuisson et qui se sera insinué à l'intérieur de la structure même du bandage, en provoquant ainsi une décohésion entre couches de gomme constitutives dudit bandage.

L'endommagement de la membrane de cuisson étant toutefois un processus progressif, bien que très variable d'une membrane à l'autre, il a été envisagé de détecter d'éventuelles fuites affectant la membrane de cuisson dans le but de permettre un remplacement préventif, mais néanmoins non prématuré, de la membrane de cuisson, avant que ne survienne une déchirure de ladite membrane de cuisson.

Ainsi, on connaît notamment par le document EP-1 213 573 un procédé de détection de fuite d'une membrane de cuisson selon lequel, après l'opération de cuisson, on entr'ouvre le moule de cuisson alors que la membrane de cuisson se trouve encore sous pression, afin que, si la membrane de cuisson est perforée, une partie de la vapeur d'eau sous pression contenue dans la membrane de cuisson puisse s'échapper à travers la perforation et forcer un passage entre la surface externe de la membrane de cuisson et la surface interne du bandage, jusqu'à parvenir à un capteur d'humidité qui est placé à proximité de l'axe central du moule.

Toutefois, un tel procédé connu ne permet qu'une détection très imparfaite et assez peu fiable des fuites, puisqu'il faut, pour que la détection soit effective, d'une part que l'orifice à l'origine de la fuite soit suffisamment gros pour laisser s'échapper une quantité de vapeur suffisante pour que la variation d'humidité qui en résulte au voisinage du capteur d'humidité soit perceptible par ledit capteur d'humidité, d'autre part que le bandage cuit, qui se trouve encore dans le moule, n'obture pas trop fermement ledit orifice de fuite de sorte que la vapeur puisse forcer le passage entre la membrane et le bandage, et enfin que le passage que la vapeur crée entre la membrane de cuisson et le bandage conduise effectivement le flux de vapeur jusqu'au capteur d'humidité, sans disperser ledit flux au sein du moule ni dévier ledit flux de vapeur vers un autre orifice d'échappement qui serait distant dudit capteur d'humidité.

En outre, un tel procédé est potentiellement dangereux, puisqu'il nécessite d'ouvrir le moule alors que la membrane de cuisson est encore sous une forte pression, car une pression élevée est en effet requise pour générer le flux de fuite et forcer un passage de la vapeur d'eau entre la membrane de cuisson et le bandage. On augmente donc, lors de cette phase critique, le risque de déchirure subite, voire d'éclatement, de la membrane de cuisson, d'endommagement du bandage, et le cas échéant de projection de vapeur brûlante et donc de dommage corporel sur un opérateur qui se trouverait à proximité du moule.

Par ailleurs, ce même document indique qu'un système de détection de fuite qui reposerait non plus sur une mesure d'humidité mais plutôt sur une mesure de pression ne serait pas fiable, et en particulier inapte à détecter de petites perforations, car le débit de fuite, et donc la variation correspondante de pression, seraient alors tellement faibles qu'ils en seraient indétectables en pratique.

Les inventeurs ont d'ailleurs pu confirmer par eux-mêmes ce problème de l'indétectabilité des petites fuites par les procédés connus, en constatant que, lors de tests d'étanchéité effectués par eux conformément à ces procédés connus, des phénomènes de condensation de la vapeur d'eau utilisée pour gonfler la membrane se produisent, et que ces phénomènes de condensation entraînent, à l'intérieur de la membrane, des chutes de pression dont l'amplitude est du même ordre de grandeur que, voire supérieure à, l'amplitude des variations de pression imputables à la fuite elle-même. Il est alors impossible de faire la distinction entre une fuite et un phénomène normal de condensation dont les effets masquent ceux de ladite fuite.

Par ailleurs, il peut arriver qu'une membrane de cuisson souffre d'une fuite qui est suffisante pour provoquer des dommages au bandage, notamment en laissant s'échapper suffisamment de fluide de gonflage pour provoquer une décohésion des couches constitutives du bandage, mais qui est néanmoins trop petite pour être détectée directement au niveau de l'installation de cuisson. En pareille situation, la défaillance de l'installation de cuisson peut ne se révéler que bien plus tardivement, soit directement sur l'installation de cuisson elle-même, lorsque la fuite provoque finalement une déchirure bien visible de la membrane de cuisson, soit indirectement, en aval de l'installation de cuisson, lorsque l'on constate, au niveau d'une installation de contrôle de la qualité des bandages finis, que les bandages issus de l'installation de cuisson présentent des défauts. Or, une conséquence préjudiciable du caractère tardif de la détection du défaut de la membrane est que l'installation de cuisson est susceptible de produire, pendant le laps de temps qui sépare l'apparition de la fuite de la détection du défaut, tout un lot de bandages défectueux, avant que la fuite de la membrane de cuisson ne soit finalement diagnostiquée et la membrane défectueuse remplacée. Il en résulte bien entendu un gaspillage de matières premières et d'énergie, et donc une perte de rendement industriel. D'autres exemples de procédés et de moyens permettant de détecter des fuites dans une installation de cuisson de bandages sont décrits par les documents US2013/087940, US2006/037382 ou JP2019214158.

Les objets assignés à l'invention visent par conséquent à remédier aux inconvénients susmentionnés et proposer un nouveau procédé permettant de détecter des fuites au sein d'une installation de cuisson de bandages, et plus particulièrement de détecter des fuites affectant une membrane de cuisson, de façon particulièrement fiable et précoce, même lorsque ces fuites résultent de petite perforations de la membrane de cuisson, et ce de façon rapide, afin d'avoir le plus faible impact possible sur le temps utile de ladite installation de cuisson.

Les objets assignés à l'invention sont atteints au moyen d'un procédé de détection de fuite destiné à détecter une fuite au sein d'une installation de cuisson permettant de cuire des bandages, ladite installation comprenant :
- un moule qui est agencé pour adopter alternativement une configuration de fermeture, dans laquelle la paroi interne dudit moule, qui correspond à l'empreinte en négatif du bandage, délimite une cavité de moulage et permet une opération de cuisson dudit bandage, et une configuration d'ouverture qui permet d'extraire, après l'opération de cuisson, un bandage cuit dudit moule et de le remplacer par un bandage cru,
- une membrane de cuisson dont la surface interne délimite une chambre de gonflage permettant de gonfler la membrane de cuisson, et dont la surface externe est agencée pour, durant l'opération de cuisson, et sous l'action d'une pression dite « pression de cuisson » qui est appliquée dans la chambre de gonflage, venir en appui contre la surface interne du bandage afin de presser le bandage contre la paroi interne du moule,
- un circuit de gonflage qui comprend au moins une vanne d'admission permettant d'introduire à l'intérieur de la membrane de cuisson, dans la chambre de gonflage, un fluide de gonflage sous pression afin de gonfler la membrane de cuisson,

- un dispositif de mesure de pression agencé pour mesurer la pression dite « pression interne », qui règne à l'intérieur de la membrane de cuisson, dans la chambre de gonflage, ledit procédé comprenant :
- une étape (S100) d'ouverture du moule, au cours de laquelle, après avoir dégonflé la membrane de cuisson, on place le moule en configuration d'ouverture,
- une étape (S200) de test qui comprend :
   une sous-étape (S201) de regonflage partiel, au cours de laquelle, tandis que le moule se trouve en configuration d'ouverture, on commande l'ouverture de la vanne d'admission afin d'introduire du fluide de gonflage dans la chambre de gonflage pour augmenter la pression interne qui règne dans ladite chambre de gonflage et ainsi provoquer un regonflage de la membrane de cuisson, tout en mesurant ladite pression interne régnant dans ladite chambre de gonflage au moyen du dispositif de mesure de pression,
   puis une sous-étape (S202) de stabilisation que l'on déclenche lorsque la pression interne régnant dans la chambre de gonflage atteint un seuil prédéterminé, dit « pression de test », qui est choisi inférieur à la pression de cuisson, et selon laquelle d'une part on isole la chambre de gonflage en commandant la fermeture de la vanne d'admission, et d'autre part on applique une temporisation d'une durée prédéterminée, dite « période de temporisation », et, au terme de ladite période de temporisation, on mesure la valeur dite « pression de référence » de la pression interne qui règne dans la chambre de gonflage ,
   puis une sous-étape (S203) d'observation, au cours de laquelle on observe comment évolue la pression interne régnant dans la chambre de gonflage sur une durée prédéterminée dite « période d'observation » (d_203), afin d'identifier une évolution de la pression interne, par rapport à la pression de référence, qui soit représentative d'une situation de fuite.

Avantageusement, la mise en place d'une temporisation selon l'invention, déclenchée au moment où l'on atteint la pression de test choisie et l'on ordonne la fermeture de la vanne d'admission, permet d'assurer une certaine stabilisation du système, et ainsi d'éliminer les phénomènes transitoires qui occasionnent des variations de pression susceptibles de perturber la détection d'une fuite. Ces phénomènes transitoires peuvent notamment être liés :
- à l'inertie de la vanne d'admission, laquelle inertie est susceptible de provoquer un dépassement (« overshoot ») de la valeur de pression interne effective par rapport à la pression de test choisie, et ce d'autant que l'augmentation de la pression interne lors de la phase de regonflage présente généralement une dynamique particulièrement rapide, et/ou
- à d'éventuelles oscillations de pression liées aux réactions mécaniques de la vanne d'admission, à la compressibilité du fluide de gonflage et/ou au comportement élastique ou visco-élastique de la membrane de cuisson.

Ainsi, l'invention permet de procéder à la détection d'une variation de pression indicative d'une fuite de façon très fine, postérieurement à l'atténuation voire à l'extinction des éventuels phénomènes perturbateurs transitoires. L'éventuelle amplitude résiduelle desdits éventuels phénomènes perturbateurs transitoires est par conséquent suffisamment faible, voire nulle, au moment où s'effectue la mesure de la pression de référence à l'issue de la phase de temporisation/stabilisation, puis ensuite pendant la phase d'observation proprement dite, de sorte que ladite éventuelle amplitude résiduelle des phénomènes perturbateurs transitoires d'une part ne fausse pas la valeur de la pression de référence, et d'autre part ne masque pas la détection d'une variation de pression, même faible, qui est effectivement imputable à une fuite. Le procédé de détection de fuite selon l'invention présente ainsi une fiabilité et une sensibilité bien supérieures à celles des procédés connus.

Grâce à cette sensibilité accrue, le procédé selon l'invention permet avantageusement de détecter très tôt une fuite de faible importance, bien avant que celle-ci ne présente un risque réel d'endommagement des bandages ou de déchirure de la membrane de cuisson.

En outre, avantageusement, la maitrise des durées respective de temporisation puis d'observation, qui restent relativement réduites au regard du temps de cycle de cuisson et notamment au regard du temps nécessaire pour extraire le bandage cuit du moule et placer un nouveau bandage cru dans ledit moule pour engager un nouveau cycle de cuisson, permet de réaliser un test d'étanchéité de façon rapide. Ainsi, la mise en œuvre du procédé de détection de fuite selon l'invention immobilise peu, voire pas, l'installation de cuisson, et n'a que peu, voire pas, de conséquences néfastes sur le temps utile de ladite installation de cuisson, et donc sur le temps de cycle de cuisson moyen, considéré sur plusieurs opérations successives.

Du reste, on remarquera que le gain de fiabilité apporté par le procédé selon l'invention permet de réduire significativement l'occurrence de fuites dommageables aux bandages, et ainsi de limiter sur le long terme le taux de bandages rendus non conformes par de telles fuites, ce qui compense amplement, en termes de rendement industriel, un éventuel léger allongement du temps de cycle de cuisson moyen.

Enfin, avantageusement, tel que cela sera détaillé ci-après, le procédé selon l'invention permet de vérifier, en un seul et même test, l'étanchéité de la membrane de cuisson et le bon fonctionnement de la vanne d'admission.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

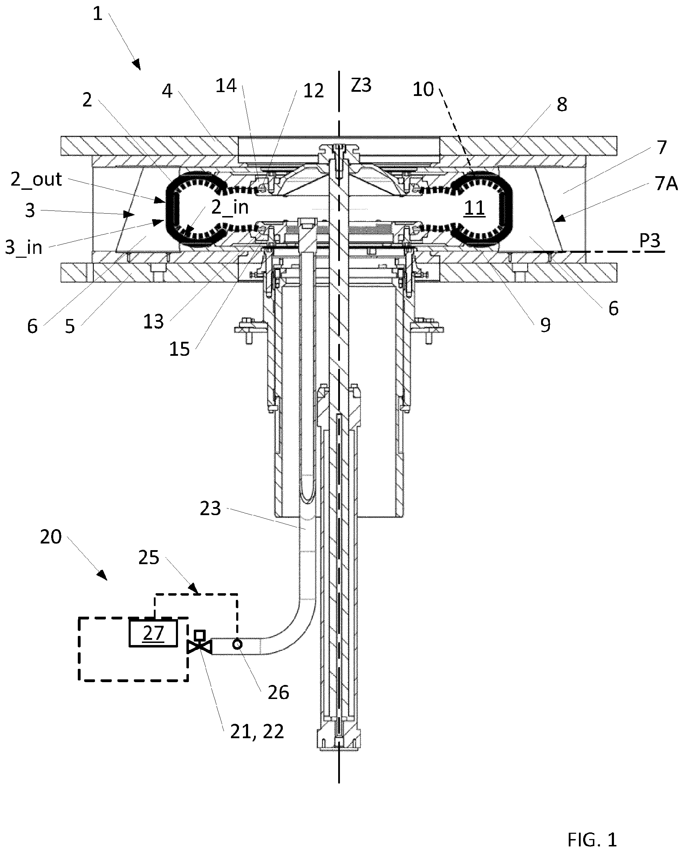

La figure 1 illustre, selon une vue en coupe dans un plan contenant l'axe central du moule, ici un plan vertical, un moule de cuisson en configuration de fermeture, pendant une opération de cuisson, la membrane de cuisson, ici représentée en pointillés, étant placée sous la pression de cuisson et pressant le bandage contre la paroi interne du moule.

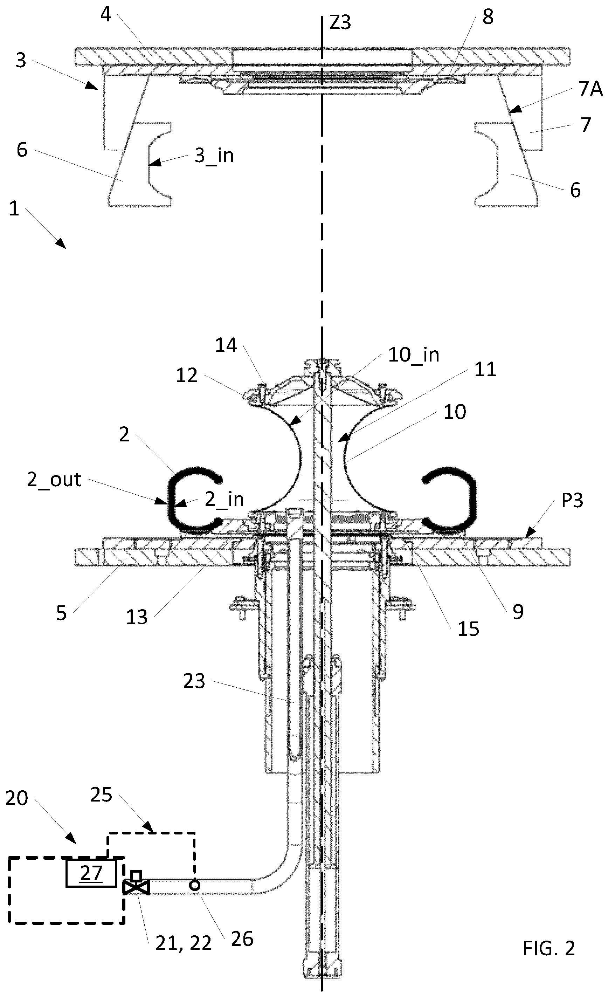

La figure 2 est une vue en coupe, dans le même plan de coupe que celui de la figure 1, du moule de cuisson en configuration d'ouverture, la membrane de cuisson étant dégonflée, et plus particulièrement mise en dépression de sorte à réduire son volume hors-tout, ce qui se traduit par une rétractation de ladite membrane par plissage, pour permettre le retrait du bandage cuit, juste avant l'étape de test visant à détecter une éventuelle fuite.

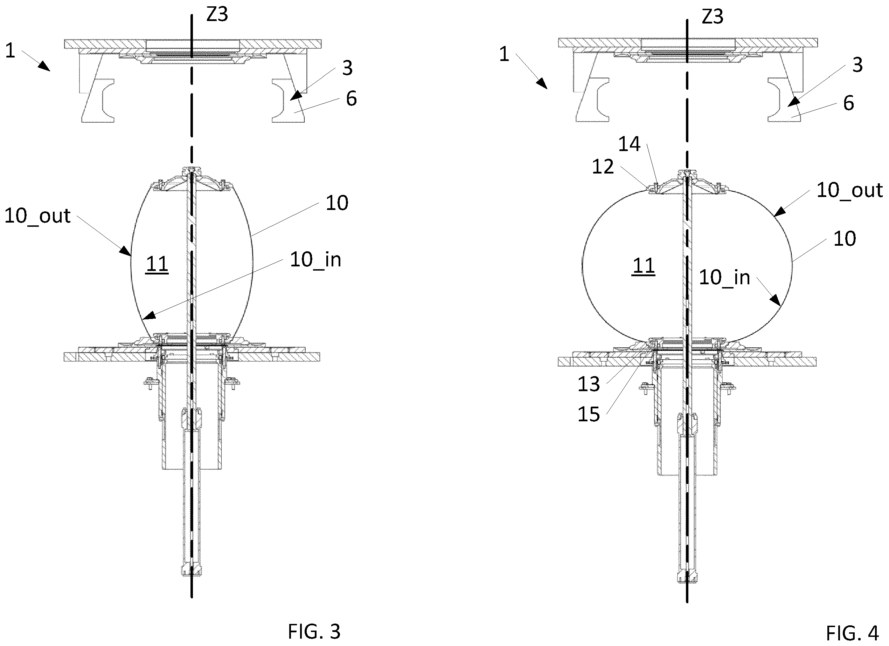

La figure 3 est une vue en coupe, dans le même plan de coupe que celui des figures 1 et 2, du moule de cuisson en configuration d'ouverture, pendant une première phase de la sous-étape de regonflage de l'étape de test, la membrane de cuisson se trouvant dans une configuration intermédiaire de regonflage qui correspond à sa configuration de repos, c'est-à-dire à la configuration qu'adopte ladite membrane lorsque la pression interne régnant dans la chambre de gonflage est égale à la pression atmosphérique ambiante qui règne autour de, et s'applique sur, la surface externe de la membrane.

La figure 4 est une vue en coupe, dans le même plan de coupe que celui des figures 1 à 3, du moule de cuisson en configuration d'ouverture, pendant une seconde phase de la sous-étape de regonflage de l'étape de test, la membrane de cuisson se trouvant partiellement regonflée, sous une pression interne égale à la pression de test souhaitée, supérieure à la pression atmosphérique ambiante et inférieure à la pression de cuisson, et ladite membrane de cuisson étant isolée par la fermeture de la vanne d'alimentation pour permettre le déroulement des sous-étapes de stabilisation puis d'observation destinées à détecter une éventuelle fuite.

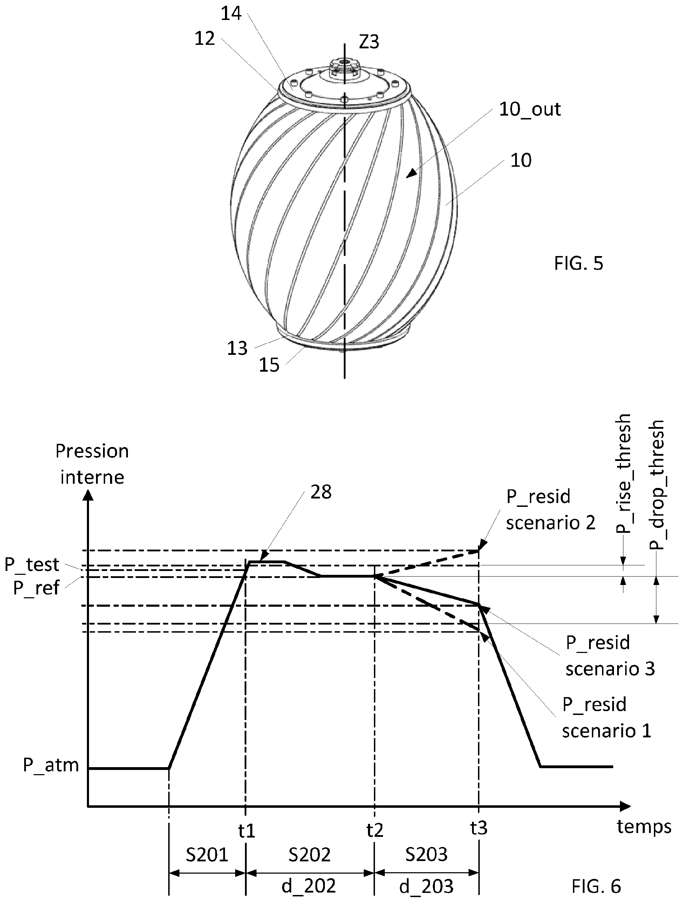

La figure 5 est une vue d'ensemble en perspective d'une membrane de cuisson selon l'invention, en configuration de repos.

La figure 6 est un graphique illustrant, de façon schématique, l'évolution de la pression interne régnant dans la chambre de gonflage, et donc plus globalement dans la membrane de cuisson, en fonction du temps, au cours d'une étape de test selon l'invention, et faisant notamment apparaître les différentes sous-étapes de regonflage partiel, de stabilisation par temporisation puis d'observation. Sur ce graphique, le scenario représenté en trait plein pendant la sous-étape d'observation traduit une faible chute de pression qui correspond à une absence de fuite, le scenario représenté en trait mixte, qui traduit une chute de pression significative pendant la période d'observation, correspond à une situation de fuite de la membrane de cuisson, et le scenario représenté en pointillés, qui traduit une augmentation de pression pendant la période d'observation, correspond à une situation de fuite de la vanne d'admission.

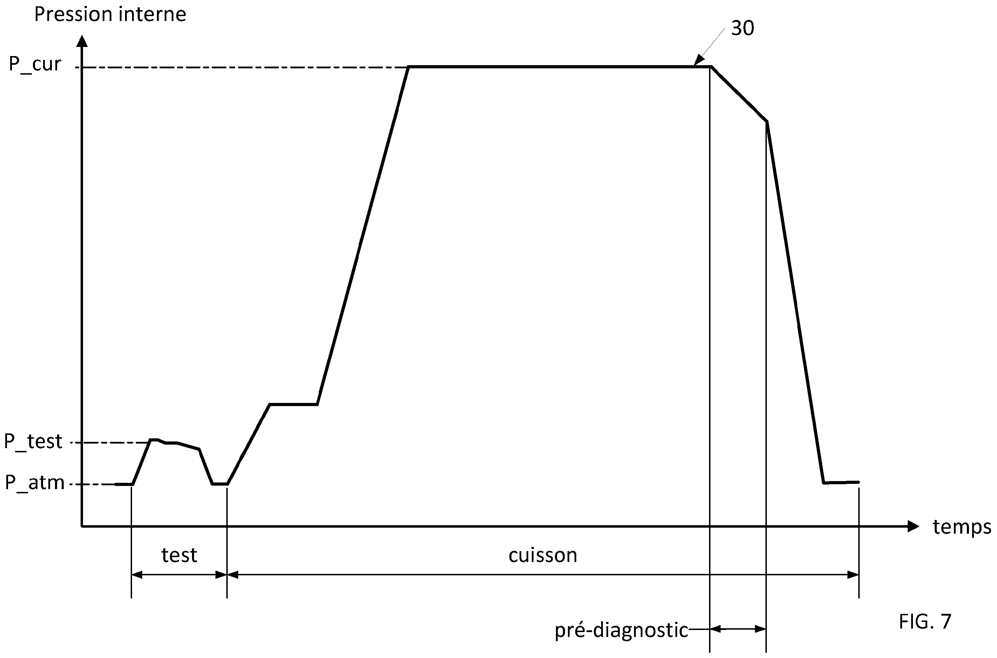

La figure 7 est un graphique illustrant l'évolution de la pression régnant dans la membrane de cuisson au cours d'une séquence comprenant tout d'abord une étape de test selon l'invention, puis une opération de cuisson d'un bandage.

La présente invention concerne un procédé de détection de fuite destiné à détecter une fuite au sein d'une installation 1 de cuisson permettant de cuire des bandages 2.

Lesdits bandages 2 sont destinés à équiper des roues de véhicule, et peuvent notamment constituer des bandages pneumatiques, au sein desquels la paroi du bandage définit, avec la jante sur laquelle le bandage est monté, une chambre remplie d'un gaz sous pression qui soutient ledit bandage, ou bien des bandages dits « sans air » qui sont soutenus par un réseau de rayons plutôt que par une chambre remplie de gaz sous pression. Les bandages 2 peuvent également, en variante, constituer des chenilles.

De préférence, lesdits bandages 2 comprennent un ou plusieurs composants à base de caoutchouc.

Tout ou partie de ces composants à base de caoutchouc, et donc plus globalement le bandage 2, se trouvent initialement à l'état cru, c'est-à-dire non vulcanisé, et l'installation de cuisson 1 permet avantageusement de mettre en œuvre une opération de cuisson destinée à vulcaniser ledit ou lesdits composants à base de caoutchouc, pour obtenir un bandage cuit.

A titre indicatif, l'opération de cuisson se déroule généralement à une température comprise entre 130°C et 200°C.

Tel que cela est visible sur les figures 1, 2 et 3, l'installation comprend un moule 3 qui est agencé pour adopter alternativement une configuration de fermeture (figure 1), dans laquelle la paroi interne 3_in dudit moule 3, qui correspond à l'empreinte en négatif du bandage 2, délimite une cavité de moulage et permet une opération de cuisson dudit bandage 2, et une configuration d'ouverture (figures 2, 3 et 4) qui permet d'extraire, après l'opération de cuisson, un bandage 2 cuit dudit moule 3 et de le remplacer par un bandage 2 cru.

De façon connue en soi, le moule 3 possède un axe central Z3, ici vertical, par rapport auquel le moule 3 présente sensiblement une forme de révolution, et qui correspond à l'axe central du bandage 2 à cuire.

Le moule 3 comprend également des plateaux 4, 5, ici un plateau inférieur 4 et un plateau supérieur 5, qui sont mobiles l'un par rapport à l'autre le long de l'axe central Z3, de sorte à pouvoir alternativement se rapprocher l'un de l'autre pour assurer la fermeture du moule 3, et s'éloigner l'un de l'autre pour assurer l'ouverture du moule 3.

L'ouverture et la fermeture du moule 3 s'opèrent selon un plan de joint noté P3.

Le moule 3 comprend un ensemble de blocs 6, dits « secteurs » 6, qui couvrent chacun un secteur angulaire prédéterminé autour de l'axe central Z3, et qui forment dans leur ensemble une structure annulaire dont la paroi interne, qui forme une partie de la paroi interne 3_in du moule, correspond à l'empreinte en négatif du sommet du bandage 2. De façon connue en soi, les secteurs 6 sont équipés de lamelles qui font saillie vers l'intérieur de la cavité de moulage et dont le dessin correspond à celui des sculptures de la bande de roulement du bandage 2.

Le moule 3 comprend de préférence en outre une frette 7 annulaire qui est mobile axialement le long de l'axe central Z3 et qui coopère selon une rampe tronconique 7A avec les secteurs 6, de sorte à pouvoir alternativement forcer le rapprochement radial centripète des secteurs 6 lors de la fermeture du moule 3, puis forcer l'écartement radial centrifuge desdits secteurs lors de l'ouverture du moule 3.

Le moule 3 comprend en outre également des coquilles 8, 9 qui sont portées par les plateaux 4, 5 et dont une paroi interne, qui forme une autre partie de la paroi interne 3_in du moule, permet de conformer les flancs du bandage, et d'y apposer certains marquages, notamment des marquages réglementaires.

L'installation 1, et plus particulièrement le moule 3, comprend également une membrane de cuisson 10 dont la surface interne 10_in délimite une chambre de gonflage 11 qui permet de gonfler la membrane de cuisson 10, et dont la surface externe 10_out est agencée pour, durant l'opération de cuisson, et sous l'action d'une pression dite « pression de cuisson » P_cur qui est appliquée dans la chambre de gonflage 11, venir en appui contre la surface interne 2_in du bandage 2 afin de presser le bandage 2, et plus particulièrement la surface externe 2_out du bandage 2, contre la paroi interne 3_in du moule 3, tel que cela est illustré sur la figure 1.

La membrane de cuisson 10, de façon connue en soi, présente de préférence, notamment au repos, en l'absence de surpression interne par rapport à la pression ambiante, une forme de révolution autour de l'axe central Z3, soit cylindrique droite, les génératrices de la membrane étant parallèles à l'axe central Z3, soit bombée en forme de tonneau, comme cela est illustré sur la figure 5, les génératrices de la membrane étant alors incurvées par rapport à l'axe central Z3.

La membrane de cuisson 10 est réalisée dans un matériau élastiquement déformable, tel que du caoutchouc vulcanisé, pour permettre l'expansion de ladite membrane de cuisson, et donc l'expansion du volume de la chambre de gonflage 11, sous l'effet de la pression exercée dans ladite chambre de gonflage 11.

L'épaisseur de la membrane de cuisson 10, qui correspond à la distance qui sépare la surface externe 10_out de la surface interne 10_in, est généralement comprise, au repos, entre 4 mm et 15 mm, et par exemple entre 4 mm et 6 mm lorsque l'installation est destinée à la cuisson de bandages destinés à des véhicules de tourisme, généralement jusqu'à 10 mm pour la cuisson de bandages destinés à des véhicules poids-lourd, et au-delà pour la cuisson de bandages destinés à des engins de génie civil.

La membrane de cuisson 10 présente, à chacune de ses extrémités axiales, un renflement annulaire formant un talon 12, 13 qui est maintenu de façon étanche par un flasque 14, 15.

L'installation 1 comporte en outre un circuit de gonflage 20 qui comprend au moins une vanne d'admission 21 permettant d'introduire à l'intérieur de la membrane de cuisson 10, dans la chambre de gonflage 11, un fluide de gonflage sous pression afin de gonfler la membrane de cuisson 10.

Le circuit de gonflage 20 comprend également au moins une vanne d'échappement 22 permettant d'évacuer le fluide de gonflage hors de la chambre de gonflage 11 afin de dégonfler la membrane de cuisson 10.

Selon une possible variante de réalisation, et tel que cela est illustré sur les figures 1 et 2, la vanne d'admission 21 et la vanne d'échappement 22 peuvent être confondues en une seule et même vanne, qui forme avantageusement une vanne d'isolement, la communication entre le circuit de gonflage 20 et la chambre de gonflage 11 s'effectuant par une conduite 23 unique qui porte ladite vanne d'isolement et qui sert tour à tour à l'admission puis à l'échappement du fluide de gonflage, et donc au gonflage puis au dégonflage de la membrane de cuisson 10.

Selon une autre variante de réalisation, la vanne d'admission 21 et la vanne d'échappement 22 sont distinctes, l'admission et l'échappement s'effectuant par deux conduites distinctes qui communiquent chacune avec la chambre de gonflage 11, à savoir une première conduite portant la vanne d'admission 21 et une seconde conduite portant la vanne d'échappement 22.

De façon connue en soi, le circuit de gonflage 20 comprend un compresseur et/ou un accumulateur (non représenté) qui permet d'alimenter la chambre de gonflage 11 avec le fluide de gonflage sous pression, via la vanne d'admission 21.

Par « sous pression », on indique de façon conventionnelle que le fluide de gonflage se trouve en surpression par rapport à la pression ambiante, et plus particulièrement à la pression atmosphérique ambiante P_atm, qui règne dans la zone d'implantation de l'installation 1, et plus particulièrement qui règne autour du moule 3.

Selon une possibilité préférentielle de réalisation, le circuit de gonflage 20 peut également comporter un système d'aspiration, tel qu'une pompe à vide, permettant de placer temporairement la chambre de gonflage 11 en dépression, c'est-à-dire sous une pression interne qui est inférieure à la pression ambiante qui règne autour du moule 3, et donc en particulier qui est inférieure à la pression ambiante qui règne à la surface externe 10_out de la membrane de cuisson 10, lorsque le moule 3 se trouve en configuration d'ouverture, et ce afin de rétracter la membrane de cuisson 10 sur elle-même, tel que cela est illustré sur la figure 2, et ainsi empêcher la membrane de cuisson 10 d'interférer avec le bandage 2, et notamment avec les talons dudit bandage 2, lorsque l'on extrait ledit bandage 2 du moule 3 après cuisson ou que l'on introduit un nouveau bandage 2 cru dans ledit moule 3.

L'installation 1 comprend également un dispositif de mesure de pression 25 agencé pour mesurer la pression, dite « pression interne », qui règne à l'intérieur de la membrane de cuisson 10, dans la chambre de gonflage 11.

Ce dispositif de mesure de pression 25 peut comporter un capteur de pression 26, de tout type approprié, lequel capteur de pression 26 pourra par exemple être situé sur une portion de la conduite 23 qui communique en permanence avec la chambre de gonflage 11, ici une portion de la conduite 23 comprise entre la vanne d'admission 21 et la chambre de gonflage 11.

L'installation 1 comprend en outre avantageusement une unité de commande 27, de préférence électronique, telle qu'un automate programmable, qui permet de réguler la pression interne qui règne au sein de la membrane de cuisson 10, dans la chambre de gonflage 11.

Ladite unité de commande 27 est avantageusement connectée au dispositif de mesure de pression 25, et permet de commander, de préférence automatiquement, le circuit de gonflage 20, et plus particulièrement l'ouverture et la fermeture de la vanne d'admission 21 et de la vanne d'échappement 22, en fonction d'une consigne de pression ou d'une loi de régulation choisie. La vanne d'admission 21 et la vanne d'échappement 22 pourront avantageusement être des électrovannes, pilotables par des signaux de commande électriques émis par l'unité de commande 27.

Ainsi, l'unité de commande 27 permet de mettre la chambre de gonflage 11 en communication tantôt avec le circuit d'admission du circuit de gonflage 20, et donc avec le compresseur ou l'accumulateur, afin d'augmenter la pression interne en injectant du fluide de gonflage sous pression dans la chambre de gonflage 11, tantôt avec le circuit d'échappement du circuit de gonflage 20 qui permet une réduction de la pression interne en laissant s'échapper du fluide de gonflage hors de la chambre de gonflage, voire qui génère une vidange forcée du fluide de gonflage par une mise en dépression (« mise au vide ») de ladite chambre de gonflage 11.

L'unité de commande 27 permet également, comme on le verra dans ce qui suit, d'isoler la chambre de gonflage 11 du circuit de gonflage 20, de sorte que ladite chambre de gonflage ne communique plus ni avec le circuit d'admission ni avec le circuit d'échappement, et ce afin de laisser la pression interne, qui règne dans ladite chambre de gonflage 11 ainsi séparée du circuit de gonflage 20, évoluer librement, passivement, sans être soumise à une régulation active. En d'autres termes, l'unité de commande 27 peut, lorsque nécessaire, inhiber la régulation de pression, notamment, comme on le verra ci-après, pour pouvoir détecter une variation anormale de la pression interne qui serait indicative d'une fuite.

Selon l'invention, le procédé comprend tout d'abord une étape (S100) d'ouverture du moule 3, au cours de laquelle, après avoir dégonflé la membrane de cuisson 10, on place le moule 3 en configuration d'ouverture, comme cela est illustré sur la figure 2.

Pour cela, on déplace la frette 7, ici portée par le plateau supérieur 4, afin d'écarter radialement les secteurs 6 de manière à dégager lesdits secteurs 6 au-delà des limites radiales du bandage 2 cuit, puis l'on soulève axialement le plateau supérieur 4, qui entraîne avec lui la frette 7 et les secteurs écartés 6, de sorte à exposer le plateau inférieur 5, le bandage 3 qui repose sur ledit plateau inférieur 5, et la membrane de cuisson 10 qui se trouve à l'état dégonflé, ici plus particulièrement dans un état rétracté du fait d'une mise au vide.

On peut ainsi accéder au bandage cuit 2 et retirer celui-ci du moule 3, en faisant glisser ledit bandage 2 cuit axialement, le long de la membrane de cuisson 10, au moyen d'un manipulateur adapté, tel qu'un bras robotisé.

On notera que, lors de cette étape (S100) d'ouverture du moule 3, la membrane de cuisson 10, et plus particulièrement la chambre de gonflage 11, peut être placée à une pression interne qui est sensiblement égale à la pression atmosphérique ambiante P_atm, pour permettre à la membrane de cuisson de retrouver, par retour élastique, ses dimensions de repos, voire peut être temporairement placée en dépression à une pression interne strictement inférieure à la pression atmosphérique ambiante P_atm, en reliant le circuit d'échappement à un dispositif d'aspiration ou de mise sous vide, de sorte à forcer la contraction radiale de la membrane de cuisson 10 vers l'axe central Z3, comme cela est illustré sur la figure 2, et ce afin de minimiser l'encombrement radial, et plus globalement le volume, de ladite membrane de cuisson 10 pour faciliter l'extraction du bandage 2.

Par simple convention, on pourra considérer qu'on se trouve dans un état de dégonflage dit « simple » lorsque la pression interne est comprise entre -0,02 bar (moins 0,02 bar) et +0,02 bar (plus 0,02 bar) dans la chambre de gonflage 11, et que l'on est dans un état de dégonflage assisté par une mise au vide lorsque ladite pression interne est inférieure ou égale à -0,3 bar (moins 0,3 bar), par exemple comprise entre -0,5 bar (moins 0,5 bar) et -0,3 bar (moins 0,3 bar).

On notera que, sauf indication contraire, les valeurs de pression sont indiquées en pression relative par rapport à la pression ambiante, considérée comme le zéro. Ainsi, en particulier, une pression relative de -1 bar (moins un bar) représente le vide absolu.

Suite à l'étape (S100) d'ouverture du moule 3, et plus préférentiellement après que l'on a retiré le bandage 2 cuit dudit moule 3 ouvert, le procédé selon l'invention comprend une étape (S200) de test.

Cette étape de test (S200) permet de tester l'étanchéité de la membrane de cuisson 10, afin de détecter une éventuelle fuite, et notamment une fuite légère liée à une perforation de petite dimension.

Ladite étape de test (S200) comprend une sous-étape (S201) de regonflage partiel, au cours de laquelle, tandis que le moule 3 se trouve en configuration d'ouverture, on commande l'ouverture de la vanne d'admission 21 afin d'introduire du fluide de gonflage dans la chambre de gonflage 11 pour augmenter la pression interne qui règne dans ladite chambre de gonflage 11 et ainsi provoquer un regonflage de la membrane de cuisson 10, tel que cela est visible sur les figures 3 et 4, tout en mesurant ladite pression interne régnant dans ladite chambre de gonflage 11 au moyen du dispositif de mesure de pression 25.

On notera que, avantageusement, préalablement à cette sous-étape (S201) de regonflage partiel, on a placé le moule de cuisson 3 en configuration d'ouverture et positionné la membrane de cuisson 10 dans l'espace de telle manière que le regonflage de la membrane de cuisson 10 puisse s'effectuer librement, dans un volume de l'espace dégagé, sans que la surface externe 10_out de ladite membrane de cuisson ne rencontre un quelconque obstacle qui pourrait masquer une fuite, et plus particulièrement sans que la surface externe 10_out de la membrane de cuisson 10 ne vienne, sous l'effet du déplacement de la membrane de cuisson 10 induit par le regonflage, en appui contre une portion de bandage 2 ou contre une portion de la paroi interne 3_in du moule 3.

Ainsi, lors de la sous-étape (S201) de regonflage partiel, la membrane de cuisson 10 s'étend librement, sous l'effet de la différence de pression qui existe entre la surface interne 10_in, soumise au fluide de gonflage, et la surface externe 10_out de la membrane de cuisson, soumise à la pression de l'atmosphère ambiante, jusqu'à atteindre un état d'équilibre qui dépend de cette différence de pression et de l'élasticité intrinsèque de ladite membrane de cuisson 10.

Avantageusement, le fait que la membrane de cuisson 10 se gonfle librement permet notamment de s'assurer qu'aucune perforation affectant la membrane de cuisson 10 ne sera obstruée, et, au contraire, que toute perforation sera dilatée par l'opération de regonflage partiel, et donc plus aisément détectable, de sorte que la totalité de la surface de la membrane de cuisson 10, comprise entre les deux talon 12, 13, est effectivement soumise au test d'étanchéité.

Bien entendu, si le circuit de gonflage 20 comprend une vanne d'échappement 22 qui est distincte de la vanne d'admission 21, ladite vanne d'échappement 22 est de préférence fermée préalablement à la sous-étape (S201) de regonflage partiel, de sorte que l'opération de regonflage s'effectue tandis que ladite vanne d'échappement 22 se trouve à l'état fermé, et empêche donc le fluide de gonflage de s'échapper de la chambre de gonflage 11.

La sous-étape (S201) de regonflage partiel s'effectue avantageusement sous le contrôle de l'unité de commande 27.

L'étape (S200) de test comprend ensuite, immédiatement à la suite de la sous-étape (S201) de regonflage partiel, une sous-étape (S202) de stabilisation, que l'on déclenche lorsque la pression interne régnant dans la chambre de gonflage 11 atteint un seuil prédéterminé, dit « pression de test » P_test, qui est choisi inférieur à la pression de cuisson P_cur, et selon laquelle on isole la chambre de gonflage 11 en commandant la fermeture de la vanne d'admission 21.

On notera que le regonflage est effectivement « partiel », en ceci que ledit regonflage porte la pression interne à une pression de test P_test qui est inférieure, et même très inférieure, à la pression de cuisson P_cur nominale.

Ainsi, la pression de test P_test est choisie suffisamment basse pour éviter que le regonflage ne puisse provoquer une déchirure voire un éclatement dangereux de la membrane de cuisson 10.

Cependant, la valeur de pression de test P_test est bien entendu choisie suffisamment élevée pour permettre de mettre en évidence d'éventuelles fuites, notamment en provoquant une expansion de la membrane de cuisson 10, et plus particulièrement une extension élastique de la membrane de cuisson 10, qui cause un élargissement de la ou des éventuelles perforations. En particulier, la pression de test est bien entendu strictement supérieure à la pression ambiante, ici en pratique la pression atmosphérique ambiante, qui règne autour de la membrane de cuisson 10 et autour du moule 3, et qui s'exerce sur la surface externe 10_out de la membrane de cuisson 10 lorsque le moule se trouve en configuration d'ouverture.

Pour les raisons susmentionnées, la pression de test P_test, qui est utilisée comme seuil pour déclencher la sous-étape (S202) de stabilisation et donc l'isolement de la chambre de gonflage 11, et donc pour définir la fin de la sous-étape (S201) de regonflage partiel, est de préférence égale ou supérieure à 30 mbar, préférentiellement égale ou supérieure à 50 mbar, plus préférentiellement égale ou supérieure à 80 mbar. Comme indiqué plus haut, une telle valeur limite basse assure un regonflage suffisant de la membrane de cuisson 10 pour bien signaler une éventuelle fuite.

D'autre part, ladite pression de test P_test est inférieure ou égale à 1 bar, préférentiellement inférieure ou égale à 350 mbar, plus préférentiellement inférieure ou égale à 200 mbar, et encore plus préférentiellement inférieure ou égale à 130 mbar. Comme indiqué plus haut, une telle valeur limite haute évite notamment une déchirure brutale de la membrane de cuisson 10.

De façon particulièrement préférentielle, la pression de test P_test peut être comprise entre 30 mbar et 130 mbar, encore plus préférentiellement entre 80 mbar et 130 mbar, et par exemple égale à 120 mbar.

Avantageusement, la détection de fuite selon l'invention peut donc s'opérer à relativement basse pression, de façon particulièrement sûre pour les opérateurs et le matériel, et avec une faible dépense d'énergie.

On notera que, par convention usuelle, les valeurs de la pression interne auquel il fait référence dans la présente demande sont exprimées en valeurs relatives, c'est-à-dire correspondent à la différence de pression qui existe entre l'intérieur de la chambre de gonflage 11, et donc plus globalement l'intérieur de la membrane de cuisson 10, d'une part, et l'extérieur de la membrane de cuisson 10 d'autre part, c'est-à-dire à la différence de pression qui existe entre la pression interne qui s'exerce sur la surface interne 10_in de la membrane de cuisson et la pression externe, de l'atmosphère ambiante, qui s'exerce sur la surface externe 10_out de la membrane de cuisson, lorsque le moule de cuisson 3 se trouve en configuration d'ouverture.

En pratique, les valeurs de pression de test P_test indiquées ci-dessus, et plus globalement les valeurs de pressions indiquées dans la présente demande, correspondent donc, sauf mention contraire, à des valeurs de pression relative exprimées par rapport à la pression atmosphérique ambiante du lieu dans lequel se trouve l'installation 1.

Sitôt que la pression interne atteint la valeur de la pression de test P_test souhaitée, on déclenche l'isolement de la chambre de gonflage 11, de manière à séparer ladite chambre de gonflage 11 du circuit de gonflage 20, ce qui revient à confiner le fluide de gonflage présent dans la chambre de gonflage 11 à l'intérieur de ladite chambre de gonflage 11, et à inhiber la régulation de la pression interne, et donc à laisser la pression interne évoluer librement au sein du volume captif de la membrane de cuisson 10, et plus particulièrement de la chambre de gonflage 11.

On notera que, en toute rigueur, le volume captif concerné par l'isolement comprend non seulement le volume de la chambre de gonflage 11 à proprement parler, mais également la portion du circuit de gonflage 20 qui reste en communication avec la chambre de gonflage 11, de sorte que ledit volume captif s'étend depuis la sortie aval de la vanne d'admission 21 jusqu'à l'entrée amont de la vanne d'échappement 22 en passant par, et en incluant, le volume de la chambre de gonflage 11. Toutefois, par simple commodité de description, on pourra faire référence au volume de la chambre de gonflage 11 pour désigner ce volume captif.

Selon la sous-étape (S202) de temporisation, on applique une temporisation d'une durée d_202 prédéterminée, dite « période de temporisation » d_202, et, au terme de ladite période de temporisation d_202, on mesure la valeur dite « pression de référence » P_ref de la pression interne qui règne dans la chambre de gonflage 11.

Le déclenchement de la commande de la vanne d'admission 21 et le déclenchement de la temporisation sont avantageusement simultanés, et provoqués par le fait que la pression interne franchit le seuil que représente la pression de test P_test. En pratique, l'unité de commande 27 envoie donc simultanément une commande de fermeture à la vanne d'admission 21 et une commande de départ à un chronomètre programmé pour la période de temporisation d_202, à partir de l'instant t1 où ladite unité de commande 27 a capté et traité l'information en provenance du dispositif de mesure de pression 25 selon laquelle la pression interne a atteint la pression de test P_test.

Comme indiqué plus haut, cette période de temporisation d_202 correspondra à une période de stabilisation, pendant laquelle se stabilise le système, en principe fermé, que constitue le fluide de gonflage qui est captif de la chambre de gonflage 11 et qui est livré à lui-même, en l'absence de régulation active, suite à la fermeture de la vanne d'admission 21.

En particulier, la temporisation permettra de différer la mesure de la pression de référence P_ref après le passage et l'atténuation, voire l'extinction, de perturbations transitoires qui résultent de l'opération de fermeture de la vanne d'admission 21.

Par exemple, tel que cela est visible sur le graphique de la figure 6, la temporisation permettra de différer la mesure de la pression de référence P_ref après le passage d'un éventuel dépassement 28, c'est-à-dire d'une surpression temporaire par rapport au seuil que représente la pression de test P_test, dépassement 28 qui résulte de l'inertie due au temps de réponse en fermeture de la vanne d'admission 21 ainsi qu'au temps de réponse du capteur de pression 26 et de la chaîne d'acquisition correspondante du dispositif de mesure de pression 25, car ces temps de réponse laissent se prolonger la phase de montée en pression très rapide initiée par la sous-étape (S201) de regonflage partiel.

Ainsi, la valeur de la pression de référence P_ref qui sera effectivement mesurée et utilisée comme référence pour détecter d'éventuelles fuites correspondra à une valeur stabilisée, non polluée par des perturbations transitoires telles qu'un dépassement ou des oscillations parasites.

On notera que, en pratique, la pression de référence P_ref, telle qu'elle est observable au terme de la temporisation, et plus globalement au terme de la sous-étape (S202) de stabilisation, peut, selon le cas, et notamment en fonction du volume de la membrane et de la température, être soit inférieure, soit supérieure, soit sensiblement égale à la consigne que représente la pression de test P_test. La représentation de la figure 6, sur laquelle la pression de référence P_ref apparaît inférieure à la pression de test P_test, n'est donc pas restrictive.

De préférence, la période de temporisation d_202 est choisie égale ou supérieure à 2 secondes, préférentiellement égale ou supérieure 3 secondes, et plus préférentiellement égale ou supérieure à 4 secondes.

Ainsi, la valeur limite basse de la durée de la période de temporisation d_202 est suffisamment longue pour que l'on soit assuré d'avoir laissé passer les éventuelles perturbations transitoires liées à l'actionnement en fermeture de la vanne d'admission 21, au temps de réaction de ladite vanne d'admission 21 et du dispositif de mesure de pression 25, et le cas échéant au comportement visco-élastique de la membrane de cuisson 10, telles que par exemple un dépassement 28 de la pression interne au-delà de la valeur de pression de test P_test ou des oscillations amorties de la pression interne.

D'autre part, et notamment en considération de l'une ou l'autre des valeurs limites basses de période de temporisation d202 susmentionnées, la période de temporisation d202 est de préférence également inférieure ou égale à 60 secondes, préférentiellement inférieure ou égale à 30 secondes, plus préférentiellement inférieure ou égale à 20 secondes, voire inférieure ou égale à 10 secondes.

Ainsi, la valeur limite haute de la période de temporisation est suffisamment courte pour ne pas prolonger inutilement la sous-étape (S202) de stabilisation, et par conséquent pour ne pas retarder inutilement la sous-étape (S203) d'observation et donc l'opération effective de recherche de fuite à proprement parler.

En pratique, dans la plupart des cas, la période de temporisation d_202 sera comprise entre 4 secondes et 30 secondes.

A titre d'exemple, la période de temporisation d_202 peut être égale à 5 secondes.

Suite à la sous-étape (S202) de stabilisation, l'étape (S200) de test comprend une sous-étape (S203) d'observation, au cours de laquelle on observe comment évolue la pression interne régnant dans la chambre de gonflage 11 sur une durée prédéterminée dite « période d'observation » d_203, afin d'identifier une évolution de la pression interne, par rapport à la pression de référence P_ref, qui soit représentative d'une situation de fuite.

La sous-étape (S203) d'observation suit avantageusement immédiatement la sous-étape (S202) de stabilisation, et débute donc à l'instant t2 où l'on a acquis la mesure de la pression de référence P_ref, et qui marque la fin de la période de temporisation d_202 et de de ladite sous-étape (S202) de stabilisation.

De préférence, la période d'observation d_203 impartie est égale ou supérieure à 5 secondes, préférentiellement égale ou supérieure à 10 secondes, plus préférentiellement égale ou supérieure à 20 secondes.

Ainsi, la valeur limite basse de la durée de la période d'observation d_203 est suffisamment longue pour que l'on puisse obtenir une variation de la pression interne, notamment une chute de la pression interne, qui soit suffisamment importante pour être détectable, et ce même dans le cas où le débit de fuite est faible, en raison par exemple de la petitesse de la perforation affectant la membrane de cuisson.

D'autre part, et notamment en considération de l'une ou l'autre des valeurs limites basses de période d'observation d_203 susmentionnées, la durée de la période d'observation d_203 est de préférence inférieure ou égale à 5 minutes, préférentiellement inférieure ou égale à 3 minutes, plus préférentiellement inférieure ou égale à 60 secondes, voire inférieure ou égale à 45 secondes.

Ainsi, la valeur limite haute de la durée de la période d'observation d_203 est suffisamment courte pour ne pas prolonger inutilement la durée de l'étape de test (S200).

En pratique, dans la plupart des cas, la période d'observation d_203 sera comprise entre 5 secondes et 30 secondes.

Par ailleurs, la période d'observation d_203 sera de préférence plus longue que la période de temporisation d_202. En effet, les phénomènes perturbateurs transitoires que l'on cherche à couvrir par la période de temporisation d_202 sont généralement assez fugaces, tandis que l'on peut avoir besoin, lors de la sous-étape (S203) d'observation, d'un temps d'observation relativement plus long pour obtenir une variation de pression, imputable à une petite fuite, qui soit d'ampleur suffisante pour être significative et détectable.

A titre d'exemple, la période d'observation d_203 peut être égale à 30 secondes, notamment suite à une période de temporisation d_202 qui aura été égale à 5 secondes.

L'observation de l'évolution de la pression interne pendant la période d'observation d_203 peut être réalisée par exemple :
- soit en mesurant en continu, et le cas échéant en enregistrant, la pression interne au fil du temps, à partir de l'instant t2 qui marque le début de ladite période d'observation d_203, et en comparant au fur et à mesure cette pression interne instantanée à la pression de référence P_ref, par exemple pour détecter le franchissement d'un seuil de pression ou un seuil de vitesse de variation de pression,
- soit en réalisant une mesure ponctuelle de la pression interne, par exemple à l'instant t3 qui marque la fin de la période d'observation d_203, et en comparant cette mesure ponctuelle à la valeur de la pression de référence P_ref qui régnait au début de la période d'observation, à l'instant t2.

Qu'elle soit continue ou ponctuelle, la mesure de la valeur de la pression interne est avantageusement réalisée au moyen du dispositif de mesure de pression 25 susmentionné, et plus particulièrement au moyen du capteur de pression 26.

Comme indiqué plus haut, lors de la sous-étape (S203) d'observation, on observe comment évolue la pression interne régnant dans la chambre de gonflage 11 sur la période d'observation d_203 afin d'identifier une évolution de la pression interne, par rapport à la pression de référence P_ref, qui soit représentative d'une situation de fuite.

Cette opération d'analyse peut en pratique être menée conjointement, en temps simultané ou quasi-simultané, avec l'acquisition de la mesure de pression interne que l'on réalise pendant la période d'observation d_203.

L'acquisition et le traitement des mesures de pression interne sont avantageusement réalisés par l'unité de commande 27, qui dispose d'un calculateur programmé à cet effet.

L'opération d'analyse permet notamment d'identifier, parmi plusieurs scenarii d'évolution de la pression interne qui auront été prédéterminés, un scénario qui est indicatif d'une fuite, et ainsi de détecter la présence d'une fuite.

Plus préférentiellement, l'opération d'analyse pourra permettre d'identifier l'origine de la fuite, et notamment de déterminer si ladite fuite affecte la membrane de cuisson 10 ou bien la vanne d'admission 21, c'est-à-dire de caractériser la fuite, en fonction du scenario d'évolution de pression interne que l'on aura constaté.

L'opération d'analyse, et donc l'identification du scenario, pourra reposer sur différents paramètres, tels que par exemple la vitesse de variation de la pression interne par unité de temps, ou le franchissement (à la hausse ou à la baisse), par la pression interne, au cours de la période d'observation d_203, d'un seuil de pression préétabli, etc.

De préférence, on calcule et on surveille à cet effet l'ampleur et le signe de la variation de pression interne que l'on observe, durant la période d'observation d_203, et plus particulièrement au terme de ladite période d'observation d_203, par rapport à la pression de référence P_ref.

Selon une possibilité préférentielle de mise en œuvre, applicable par ailleurs quel que soit le scenario ou les scenarii de fuite qui font l'objet de la sous-étape (S203) d'observation et de l'opération d'analyse, lors de la sous-étape (S203) d'observation, on mesure la pression interne dite « pression résiduelle » P_resid qui règne dans la chambre de gonflage 11 au terme de la période d'observation d_203, ici donc à l'instant t3, et l'on calcule la différence Delta_P, dite « écart » Delta_P, entre ladite pression résiduelle P_resid et la pression de référence P_ref afin de déterminer le signe et l'amplitude de l'évolution constatée :
Delta_P = P_resid - P_ref

Ainsi, de façon particulièrement simple, on calcule la différence algébrique entre d'une part la pression résiduelle P_resid, c'est-à-dire la pression interne mesurée à l'instant t3 où se termine la période d'observation d_203, et d'autre part la pression de référence P_ref, c'est-à-dire la pression interne mesurée précédemment, à l'instant t2 où s'est terminée la période de temporisation d_202 et où a commencé la période d'observation d_203.

Cette différence fournit avantageusement deux informations : le signe de l'évolution de pression, négatif pour une baisse, positif pour une hausse, et l'amplitude de l'écart constaté par rapport à la pression de référence P_ref. Cet écart, ramené au temps écoulé, ici égal à t3 - t2, entre la mesure de la pression résiduelle P_res et la mesure de la pression de référence P_ref, permet avantageusement de caractériser l'absence ou la présence d'un débit de fuite, et le cas échéant l'origine et/ou l'ampleur dudit débit de fuite.

On notera que, en variante, on pourrait surveiller en continu la pression interne pendant la période d'observation d_203, calculer en temps réel la différence entre la pression interne instantanée et la pression de référence P_ref, et conclure à la présence d'une fuite dès que cette différence excède, en valeur absolue, un seuil d'alerte prédéfini, et ce avant même que la période d'observation d_203 ne soit terminée.

Cependant, la durée totale choisie pour la période d'observation d_203 étant relativement courte, le gain de temps procuré par une telle variante ne serait pas significatif, surtout au regard de la durée qui est nécessaire pour remplacer la membrane de cuisson 10 lorsqu'une fuite est détectée.

On préférera donc, par économie d'opérations de mesure et de calcul, opter pour un simple relevé ponctuel de la pression résiduelle P_resid à l'instant t3 qui marque la fin de la période d'observation d_203, plutôt que pour une surveillance continue.

Selon une possibilité préférentielle de mise en œuvre, lors de la sous-étape (S203) d'observation, on constate, sur la période d'observation d_203, une baisse de la pression interne, ladite baisse étant d'une amplitude, en valeur absolue par rapport à la pression de référence P_ref, qui est supérieure à un seuil dit « seuil de chute » P_drop_thresh prédéterminé, et l'on conclut à une situation de fuite de la membrane de cuisson 10.

En d'autres termes, on identifie ici un premier scénario d'évolution qui est indicatif d'une situation de fuite où ladite fuite affecte la membrane de cuisson 10.

Ce premier scenario, noté « scenario 1 » et représenté en trait mixte sur la figure 6, est ici caractérisé par un écart Delta_P, c'est-à-dire une différence algébrique Delta_P = P_resid - P_ref mentionnée plus haut, dont le signe est négatif et dont l'amplitude est, en valeur absolue, supérieure au seuil de chute P_drop_thresh.

Si ce premier scenario est détecté, on déclenche, ici au moyen de l'unité de commande 27, une alerte de défaillance membrane afin de provoquer l'arrêt de la production de bandages par l'installation de cuisson 1, et le remplacement de la membrane de cuisson 10 défectueuse.

De préférence, le seuil de chute P_drop_thresh est compris, en valeur absolue, entre 10 mbar et 150 mbar, de préférence égal à 10 mbar.

De manière alternative, ou bien de manière équivalente, on pourra définir le seuil de chute P_drop_thresh comme une fraction de la pression de référence P_ref, ce qui peut par exemple se révéler utile s'il est difficile de maîtriser de manière reproductible la pression de référence P_ref d'un test à l'autre, du fait que ladite pression de référence P_ref a tendance à fluctuer d'un test à l'autre bien que la valeur de la pression de test P_test choisie soit identique pour ces différents tests. Ainsi, par exemple, on pourra choisir le seuil de chute P_drop_thresh dans une plage de valeurs comprises entre 5 % et 20 % de la pression de référence P_ref, par exemple entre 8 % et 10% de la pression de référence P_ref ; concrètement, cela peut revenir à fixer un seuil de chute P_drop_thresh de l'ordre de 10 mbar à 12 mbar au regard d'une pression de référence P_ref mesurée de l'ordre de 120 mbar.

Selon une autre possibilité préférentielle de mise en œuvre, qui peut être complémentaire de la précédente, lors de la sous-étape (S203) d'observation, on constate une augmentation de la pression interne, ladite augmentation étant d'une amplitude, en valeur absolue par rapport à la pression de référence P_ref, qui est supérieure à un seuil dit « seuil de hausse » P_rise_thresh prédéterminé, et l'on conclut, lors de la sous-étape (S204) d'analyse, à une situation de fuite de la vanne d'admission 21.

En d'autres termes, on identifie ici un second scénario d'évolution qui est indicatif d'une situation de fuite où ladite fuite affecte cette fois la vanne d'admission 21. En effet, un tel second scenario est indicatif d'une défaillance de la vanne d'admission 21 qui, mal fermée, laisse le fluide de gonflage sous pression continuer à pénétrer à l'intérieur de la membrane de cuisson 10, dans la chambre de gonflage 11.

Ce second scenario, noté « scenario 2 » et représenté en trait pointillé sur la figure 6, est ici caractérisé par un écart Delta_P, c'est-à-dire une différence algébrique Delta_P = P_resid - P_ref mentionnée plus haut, dont le signe est positif et dont l'amplitude est, en valeur absolue, supérieure au seuil de hausse P_rise_thresh.

Si ce second scenario est détecté, on déclenche, ici au moyen de l'unité de commande 27, une alerte de défaillance vanne, afin de stopper la production de bandages et de provoquer une inspection de l'installation 1 et une opération de maintenance de la vanne d'admission 21.

De façon particulièrement préférentielle, le seuil de hausse P_rise_thresh pourra être choisi égal à 0 (zéro) mbar, dans la mesure où l'on peut considérer que le moindre accroissement de la pression interne qui surviendrait, après la stabilisation offerte par la période de temporisation d202, par rapport à la pression de référence P_ref, ne peut que résulter d'une défaillance de la vanne d'admission 21.

Ainsi, selon une possibilité préférentielle de mise en œuvre, on pourra constater, sur la période d'observation d_203, une augmentation de la pression interne par rapport à la pression de référence P_ref, et l'on conclura alors à une situation de fuite de la vanne d'admission 21.

Globalement, le procédé, en l'espèce l'étape (S200) de test, prévoit donc, et permet d'identifier, au moins un scenario d'évolution de la pression interne qui soit indicatif d'une situation de fuite, et encore plus préférentiellement prévoit (au moins) deux scenarii d'évolution de la pression interne qui sont indicatifs chacun d'une situation de fuite, parmi :
- un premier scenario qui est indicatif d'une fuite affectant la membrane de cuisson 10,
- un second scenario qui est indicatif d'une fuite affectant la vanne d'admission 21.

Comme indiqué plus haut, l'identification de l'un ou l'autre scenario, et donc le diagnostic de présence ou d'absence de fuite, s'effectue de préférence en calculant l'écart Delta_P entre la pression résiduelle P_resid mesurée à la fin de la période d'observation d_203 et la pression de référence P_ref mesurée à la fin de la période de temporisation d_202, et en examinant d'une part le signe, positif ou négatif, de cet écart Delta_P, et d'autre part l'amplitude de cet écart Delta_P, amplitude que l'on pourra comparer à cet effet aux seuils de chute P_drop_thresh et de hausse P_rise_thresh susmentionnés.

Avantageusement, une même étape (S200) de test peut ainsi permettre de vérifier à la fois l'étanchéité de la membrane de cuisson 10 et l'étanchéité, et plus globalement le bon fonctionnement, de la vanne d'admission 21 ; laquelle vanne d'admission 21 constitue le cas échéant l'unique vanne d'isolement permettant sélectivement de mettre en communication la chambre de gonflage 11 avec le circuit de gonflage 20 ou au contraire d'isoler ladite chambre de gonflage 11 du circuit de gonflage 20.

Bien entendu si, selon un scenario dit « scenario d'évolution normale », ou le cas échéant « troisième scenario », noté « scenario 3 » et représenté en trait plein sur la figure 6, on constate, lors de l'opération d'analyse :
- que l'écart Delta_P reste contenu entre les seuils de chute P_drop_thresh d'une part et de hausse P_rise_thresh d'autre part, c'est-à-dire que ledit écart Delta_P reste contenu dans la plage [- P_drop_thresh ; + P_rise_thresh],
- ou, de manière équivalente, que la pression résiduelle P_resid mesurée est comprise entre P_ref - P_drop_thresh (limite basse) et P_ref + P_rise_thresh (limite haute),
alors on conclut à l'absence de fuite, et à la possibilité d'engager un nouveau cycle de cuisson avec la même membrane de cuisson 10, sans qu'il soit nécessaire, notamment, de procéder à un remplacement de ladite membrane de cuisson 10.

Ces différents scenarii sont illustrés sur la figure 6.

Après la sous-étape (S203) d'observation, la membrane de cuisson 10 est dégonflée, de sorte que la pression interne qui règne dans la chambre de gonflage 11 est descendue à un niveau égal à, voire inférieur à, la pression atmosphérique ambiante P_atm.

Pour ce faire, l'unité de commande 27 met de préférence la chambre de gonflage 11 en communication, par l'intermédiaire de la vanne d'échappement 22, d'abord avec une conduite d'échappement qui débouche à l'air libre, à la pression atmosphérique ambiante P_atm, puis, pour accélérer la fin du processus de vidange et aider à la rétractation de la membrane de cuisson 10, avec un circuit de mise au vide créant une dépression, tel que décrit plus haut.

Ainsi, la membrane de cuisson 10 retrouve un état rétracté, dans lequel ladite membrane de cuisson 10 est plissée sur elle-même, et qui va permettre la mise en place d'un nouveau bandage 2 cru dans le moule 3 puis la fermeture du moule 3 en vue d'une nouvelle opération de cuisson.

De préférence, le fluide de gonflage utilisé pour l'étape (S200) de test est un gaz sec, c'est-à-dire un gaz qui présente, lorsqu'il parvient à la vanne d'admission 21, et donc plus globalement lorsqu'il pénètre dans et occupe la chambre de gonflage 11, une humidité spécifique qui est inférieure ou égale à 0,005 kg/kg (cinq pour mille).

Par « humidité spécifique », ou « teneur en eau », on désigne le rapport entre la masse d'eau, en kilogramme, qui est contenue dans le gaz considéré et la masse totale, en kilogramme, dudit gaz (considéré à l'état « humide », c'est-à-dire en incluant ladite masse d'eau).

Avantageusement, l'utilisation d'un gaz sec permet notamment d'éviter les phénomènes de condensation susceptibles de perturber l'évolution de la pression interne qui règne dans la membrane de cuisson 10, et donc permet d'éviter les erreurs d'interprétation lors de l'étape (S200) de test, plus particulièrement lors de la sous-étape (S203) d'observation et de l'opération d'analyse.

En outre, l'utilisation d'un gaz sec comme fluide de gonflage évite de devoir équiper l'installation 1 d'un circuit de génération et de gestion de la vapeur d'eau. On économise ainsi de l'espace et de l'énergie.

De préférence, c'est le même gaz sec, et donc le même circuit de gonflage 20, qui est utilisé d'une part pour l'étape (S200) de test, et plus particulièrement pour la sous-étape (S201) de regonflage, et d'autre part pour l'opération de cuisson.

De préférence, le fluide de gonflage utilisé pour l'étape (S200) de test, et plus préférentiellement aussi pour les opérations de cuisson, est un gaz contenant plus de 99,8 % de diazote pur.

Un tel gaz est avantageusement disponible couramment dans l'industrie, et notamment stockable sous forme de diazote liquide. En outre, on est ainsi assuré d'avoir un gaz qui d'une part est complètement sec, ici dont la fraction volumique en eau est par exemple inférieure à 40 ppmv (typiquement à 5 bar), et d'autre part neutre et non dangereux.

Par ailleurs, on notera que, lorsque l'installation 1 de cuisson est pourvue d'un système de transbordement qui permet, à partir d'un même côté du moule 3, alternativement de décharger le bandage 2 cuit du moule 3 puis de charger ensuite un bandage 2 cru dans ledit moule 3, en remplacement du bandage cuit, alors l'étape (S200) de test peut avantageusement être accomplie en temps masqué, dans la durée qui sépare l'extraction du bandage 2 cuit hors du moule 3, qui se trouve en configuration d'ouverture, et la réintroduction dans ledit moule 3 d'un nouveau bandage 2 cru. En effet, la durée totale de l'étape (S200) de test, incluant le temps nécessaire au regonflage, à la temporisation pour stabilisation, puis à l'observation et à l'analyse, est relativement courte, typiquement comprise entre 40 secondes et 80 secondes.

Afin de ne pas pénaliser excessivement le temps utile de l'installation 1 de cuisson, on n'effectuera de préférence pas de façon systématique l'étape (S200) de test d'étanchéité selon l'invention à chaque opération de cuisson, mais plutôt de façon espacée, selon une périodicité prédéterminée.

Ainsi, de préférence, on applique l'étape (S200) de test selon une fréquence, dite « fréquence de test », prédéterminée, qui prévoit d'espacer deux étapes (S200) de test consécutives, pratiquées sur une même membrane de cuisson 10, d'une pluralité d'opérations de cuisson, réalisées avec ladite même membrane de cuisson 10, de sorte que l'on réduit l'impact de la durée de l'étape (S200) de test sur le temps utile de l'installation 1 en répartissant en moyenne cette durée de l'étape (S200) de test sur le nombre d'opérations de cuisson de ladite pluralité d'opérations de cuisson.

A titre d'exemple, on espacera les tests d'étanchéité réalisés conformément à l'étape (S200) de test d'un intervalle d'au moins cinq opérations de cuisson, d'au moins dix opérations de cuisson, voire de cinquante opérations de cuisson.

En d'autres termes, la fréquence de test sera de préférence choisie de sorte que l'on réalise une étape (S200) de test toutes les cinq, ou au moins cinq, étapes de cuisson, de préférence toutes les dix, ou au moins dix, opérations de cuisson, voire toutes les cinquante, ou au moins cinquante, opérations de cuisson.

Plus particulièrement, on pourra donc avoir par exemple une fréquence de test égale à un test toutes les cinquante opérations de cuisson, ou à un test toutes les dix opérations de cuisson, ou égale à un test toutes les cinq opérations de cuisson.

De préférence, fréquence de test augmente avec le nombre d'opérations de cuisson réalisées par la même membrane de cuisson 10 considérée, selon une loi de planification prédéterminée, de sorte que ladite membrane de cuisson 10 soit soumise à une étape (S200) de test d'autant plus fréquemment que le nombre d'opérations de cuisson que ladite membrane de cuisson 10 a réalisées augmente.

En d'autres termes, plus la membrane de cuisson 10 vieillit, plus fréquemment on teste son étanchéité. Ainsi, par exemple, la fréquence de test peut être fixée à un test toutes les cinquante opérations de cuisson pour une membrane de cuisson neuve, puis ramenée à un test toutes les dix opérations de cuisson, puis à un test toutes les cinq opérations de cuisson.

Par ailleurs, on réalise de préférence, tel que cela est visible sur la figure 7, en temps masqué lors d'une opération de cuisson, et plus préférentiellement lors de chaque opération de cuisson, tandis que le moule 3 se trouve en configuration de fermeture et alors que la membrane de cuisson 10 est soumise à la pression de cuisson P_cur, par exemple dans les deux à quatre minutes qui précèdent la fin de l'opération de cuisson, une opération de pré-diagnostic selon laquelle on isole la chambre du gonflage 11 en commandant la fermeture de la vanne d'admission 21 et l'on surveille la pression interne régnant dans la membrane de cuisson afin de pouvoir détecter une baisse anormale de la pression interne indicative d'une fuite potentielle, et, en cas de détection d'une telle baisse anormale de la pression interne indicative d'une fuite potentielle durant l'opération de cuisson en cours, on conditionne le démarrage de l'opération de cuisson suivante à la réalisation d'une étape (S200) de test.

En particulier, on peut ainsi, si nécessaire, forcer le déclenchement d'une étape (S200) de test immédiatement après l'étape (S100) d'ouverture du moule qui marque le terme de l'opération de cuisson au cours de laquelle l'opération de pré-diagnostic a détecté une potentielle fuite, peu important la fréquence de test initialement prévue.

Ainsi, si l'on détecte pendant l'opération de cuisson, et donc avantageusement en temps masqué, un signe avant-coureur d'une fuite, alors on déclenche de façon anticipée un test d'étanchéité approfondi, conformément à l'étape (S200) de test, sitôt le moule 3 réouvert, afin de contrôler avec certitude l'étanchéité de la membrane de cuisson 10 avant toute reprise d'une nouvelle opération de cuisson. Bien entendu, si l'étape (S200) de test confirmer la présence d'une fuite, alors l'installation 1 sera stoppée jusqu'à ce que qu'elle soit réparée, et notamment, s'il y a lieu, jusqu'à ce que la membrane de cuisson 10 usagée soit remplacée. Priorité est ainsi donnée à la sécurité et à la qualité de la production.

Une telle disposition permet notamment de garantir, sans dégrader le temps utile de l'installation 1, un niveau de risque acceptable, malgré l'espacement des étapes (S200) de test conformément à la fréquence de test, et ainsi d'obtenir un compromis optimisé entre qualité de production et rythme de production.

L'opération de pré-diagnostic peut être avantageusement déclenchée alors que l'on achève un palier de cuisson 30 pendant lequel on a maintenu ladite pression interne au niveau d'une pression de cuisson P_cur souhaitée, tel que cela est visible sur la figure 7.

A titre d'exemple indicatif, sur une durée d'opération de cuisson de huit minutes, on pourra, conformément à l'opération de pré-diagnostic, isoler la chambre de gonflage 11, c'est-à-dire inhiber la régulation de pression, trois minutes avant la fin de l'opération de cuisson, alors que règne une pression interne de l'ordre de 16 bar à 21 bar, et observer l'évolution de la pression interne. Si l'on constate une baisse de la pression interne de plus de 80 mbar, alors on conclura à un soupçon de fuite, et l'on forcera le déclenchement de l'étape (S200) de test avant de débuter une nouvelle opération de cuisson, par exemple directement à la fin de l'opération de cuisson en cours, à la réouverture du moule 3.

On notera que le fait de réaliser l'opération de pré-diagnostic vers la fin de l'opération de cuisson permet avantageusement de s'assurer que la température du moule 3 est stabilisée, et notamment que les températures du moule 3, du bandage 2 et de la membrane de cuisson 10 sont stables, et que par conséquent une éventuelle variation de pression interne, et plus particulièrement une éventuelle chute de pression interne, sera bien attribuable à une fuite, et non à des fluctuations de la température du fluide de gonflage qui est contenu dans la membrane de cuisson 10, par exemple à des fluctuations qui seraient dues à un transfert de chaleur du fluide de gonflage vers le bandage 2.

Bien entendu, l'invention porte également en tant que telle sur une installation 1 de cuisson permettant de cuire des bandages 2, ladite installation 1 comprenant :
- un moule 3 qui est agencé pour adopter alternativement une configuration de fermeture, dans laquelle la paroi interne 3_in dudit moule délimite une cavité de moulage correspondant **à l'empreinte** en négatif du bandage 2 et permet une opération de cuisson dudit bandage, et une configuration d'ouverture permettant d'extraire, après l'opération de cuisson, un bandage 2 cuit dudit moule et de le remplacer par un bandage 2 cru,
- une membrane de cuisson 10 dont la surface interne 10_in délimite une chambre de gonflage 11 permettant de gonfler la membrane de cuisson 10, et dont la surface externe 10_out est agencée pour, durant l'opération de cuisson, et sous l'action d'une pression dite « pression de cuisson » P_cur qui est appliquée dans la chambre de gonflage 11, venir en appui contre la surface interne 2_in du bandage afin de presser le bandage 2 contre la paroi interne 3_in du moule 3,
- un circuit de gonflage 20 qui comprend au moins une vanne d'admission 21 permettant d'introduire à l'intérieur de la membrane de cuisson 10, dans la chambre de gonflage 11, un fluide de gonflage sous pression afin de gonfler la membrane de cuisson 10,
- un dispositif de mesure de pression 25 agencé pour mesurer la pression dite « pression interne », qui règne à l'intérieur de la membrane de cuisson 10, dans la chambre de gonflage 11,
ladite installation 1 comprenant une unité de commande 27 qui est agencée pour faire exécuter à ladite installation :
- une étape (S100) d'ouverture du moule 3, au cours de laquelle, après avoir dégonflé la membrane de cuisson 10, on place le moule 3 en configuration d'ouverture,
- une étape (S200) de test conformément au procédé de détection de fuite selon l'une quelconque des possibilités décrites dans ce qui précède.

Bien entendu, l'invention n'est nullement limitée aux seules variantes de réalisation décrites dans ce qui précède, l'homme du métier étant notamment à même d'isoler ou de combiner librement entre elles l'une ou l'autre des caractéristiques susmentionnées, ou de leur substituer des équivalents, pour autant que ces modifications demeurent dans le champ de protection défini par les revendications.

## Revendications

1. Procédé de détection de fuite destiné à détecter une fuite au sein d'une installation (1) de cuisson permettant de cuire des bandages (2), ladite installation comprenant :
- un moule (3) qui est agencé pour adopter alternativement une configuration de fermeture, dans laquelle la paroi interne (3_in) dudit moule (3), qui correspond à l'empreinte en négatif du bandage (2), délimite une cavité de moulage et permet une opération de cuisson dudit bandage, et une configuration d'ouverture qui permet d'extraire, après l'opération de cuisson, un bandage cuit dudit moule (3) et de le remplacer par un bandage cru,
- une membrane de cuisson (10) dont la surface interne (10_in) délimite une chambre de gonflage (11) permettant de gonfler la membrane de cuisson (10), et dont la surface externe (10_out) est agencée pour, durant l'opération de cuisson, et sous l'action d'une pression dite « pression de cuisson » (P_cur) qui est appliquée dans la chambre de gonflage (11), venir en appui contre la surface interne (2_in) du bandage afin de presser le bandage (2) contre la paroi interne (3_in) du moule,
- un circuit de gonflage (20) qui comprend au moins une vanne d'admission (21) permettant d'introduire à l'intérieur de la membrane de cuisson (10), dans la chambre de gonflage (11), un fluide de gonflage sous pression afin de gonfler la membrane de cuisson (10),
- un dispositif de mesure de pression (25) agencé pour mesurer la pression, dite « pression interne », qui règne à l'intérieur de la membrane de cuisson (10), dans la chambre de gonflage (11),
ledit procédé étant **caractérisé en ce qu'**il comprend :
- une étape (S100) d'ouverture du moule, au cours de laquelle, après avoir dégonflé la membrane de cuisson (10), on place le moule (3) en configuration d'ouverture,
- une étape (S200) de test qui comprend :
une sous-étape (S201) de regonflage partiel, au cours de laquelle, tandis que le moule (3) se trouve en configuration d'ouverture, on commande l'ouverture de la vanne d'admission (21) afin d'introduire du fluide de gonflage dans la chambre de gonflage (11) pour augmenter la pression interne qui règne dans ladite chambre de gonflage (11) et ainsi provoquer un regonflage de la membrane de cuisson (10), tout en mesurant ladite pression interne régnant dans ladite chambre de gonflage au moyen du dispositif de mesure de pression (25),
puis une sous-étape (S202) de stabilisation que l'on déclenche lorsque la pression interne régnant dans la chambre de gonflage (11) atteint un seuil prédéterminé, dit « pression de test » (P_test), qui est choisi inférieur à la pression de cuisson (P_cur), et selon laquelle d'une part on isole la chambre de gonflage (11) en commandant la fermeture de la vanne d'admission (21), et d'autre part on applique une temporisation d'une durée (d_202) prédéterminée, dite « période de temporisation » (d_202), et, au terme de ladite période de temporisation (d_202), on mesure la valeur dite « pression de référence » (P_ref) de la pression interne qui règne dans la chambre de gonflage (11),
puis une sous-étape (S203) d'observation, au cours de laquelle on observe comment évolue la pression interne régnant dans la chambre de gonflage (11) sur une durée prédéterminée dite « période d'observation » (d _203), afin d'identifier une évolution de la pression interne, par rapport à la pression de référence (P_ref), qui soit représentative d'une situation de fuite.

2. Procédé selon la revendication 1 **caractérisé en ce que** la période de temporisation (d_202) est choisie d'une part égale ou supérieure à 2 secondes, préférentiellement égale ou supérieure à 3 secondes, plus préférentiellement égale ou supérieure à 4 secondes, valeur limite basse, et d'autre part inférieure ou égale à 60 secondes, préférentiellement inférieure ou égale à 30 secondes, plus préférentiellement inférieure ou égale à 20 secondes, voire inférieure ou égale à 10 secondes, valeur limite haute, par exemple égale à 5 secondes.

3. Procédé selon la revendication 1 ou 2 **caractérisé en ce que** l'on constate, sur la période d'observation (d_203), une baisse de la pression interne, ladite baisse étant d'une amplitude, en valeur absolue par rapport à la pression de référence (P_ref), qui est supérieure à un seuil dit « seuil de chute » (P_drop_thresh) prédéterminé, et l'on conclut à une situation de fuite de la membrane de cuisson (10).

4. Procédé selon la revendication 3 **caractérisé en ce que** le seuil de chute (P_drop_thresh) est compris, en valeur absolue, entre 10 mbar et 150 mbar, de préférence égal à 10 mbar.

5. Procédé selon l'une des revendications 1 à 4 **caractérisé en ce que** l'on constate, sur la période d'observation (d_203), une augmentation de la pression interne par rapport à la pression de référence (P_ref), et l'on conclut à une situation de fuite de la vanne d'admission (21).

6. Procédé selon l'une des revendications précédentes **caractérisé en ce que** la période d'observation (d_203) impartie est d'une part égale ou supérieure à 5 secondes, préférentiellement égale ou supérieure à 10 secondes, plus préférentiellement égale ou supérieure à 20 secondes, valeur limite basse, et d'autre part inférieure ou égale à 5 minutes, préférentiellement inférieure ou égale à 3 minutes, plus préférentiellement inférieure ou égale à 60 secondes, voire inférieure ou égale à 45 secondes, valeur limite haute, par exemple égale à 30 secondes.

7. Procédé selon l'une des revendications précédentes **caractérisé en ce que**, lors de la sous-étape (S203) d'observation, on mesure la pression interne dite « pression résiduelle » (P_resid) qui règne dans la chambre de gonflage (11) au terme (t3) de la période d'observation (d_203), et l'on calcule la différence entre ladite pression résiduelle (P_resid) et la pression de référence (P_ref) afin de déterminer le signe et l'amplitude de l'évolution constatée.

8. Procédé selon l'une des revendications précédentes **caractérisé en ce que** le fluide de gonflage utilisé pour l'étape (S200) de test est un gaz sec, c'est-à-dire un gaz qui présente, lorsqu'il parvient à la vanne d'admission (21), une humidité spécifique qui est inférieure ou égale à 0,005 kg/kg, de préférence un gaz contenant plus de 99,8 % de diazote pur.

9. Procédé selon l'une des revendications précédentes **caractérisé en ce que** la pression de test (P_test) qui est utilisée comme seuil pour déclencher la sous-étape (S202) de stabilisation est d'une part égale ou supérieure à 30 mbar, préférentiellement égale ou supérieure à 50 mbar, plus préférentiellement égale ou supérieure à 80 mbar, valeur limite basse, et d'autre part inférieure ou égale à 1 bar, préférentiellement inférieure ou égale à 350 mbar, plus préférentiellement inférieure ou égale à 200 mbar, et encore plus préférentiellement inférieure ou égale à 130 mbar, valeur limite haute.

10. Procédé selon l'une des revendications précédentes **caractérisé en ce que** la pression de test (P_test) est comprise entre 80 mbar et 130 mbar.

11. Procédé selon l'une des revendications précédentes **caractérisé en ce que** l'on applique l'étape (S200) de test selon une fréquence, dite « fréquence de test », prédéterminée, qui prévoit d'espacer deux étapes (S200) de test consécutives, pratiquées sur une même membrane de cuisson (10), d'une pluralité d'opérations de cuisson, réalisées avec ladite même membrane de cuisson (10), de sorte que l'on réduit l'impact de la durée de l'étape (S200) de test sur le temps utile de l'installation (1) en répartissant en moyenne cette durée de l'étape (S200) de test sur le nombre d'opérations de cuisson de ladite pluralité d'opérations de cuisson, ladite fréquence de test étant de préférence choisie de sorte que l'on réalise une étape (S200) de test toutes les cinq, ou au moins cinq, étapes de cuisson, de préférence toutes les dix, ou au moins dix, opérations de cuisson, voire toutes les cinquante, ou au moins cinquante, opérations de cuisson.

12. Procédé selon la revendication 11 **caractérisé en ce que** la fréquence de test augmente avec le nombre d'opérations de cuisson réalisées par la même membrane de cuisson (10) considérée, selon une loi de planification prédéterminée, de sorte que ladite membrane de cuisson (10) soit soumise à une étape (S200) de test d'autant plus fréquemment que le nombre d'opérations de cuisson que ladite membrane de cuisson a réalisées augmente.

13. Procédé selon l'une des revendications précédentes **caractérisé en ce que** l'on réalise, en temps masqué lors d'une opération de cuisson, et de préférence lors de chaque opération de cuisson, tandis que le moule (3) se trouve en configuration de fermeture et alors que la membrane de cuisson (10 ) est soumise à la pression de cuisson (P_cur), par exemple dans les deux à quatre minutes qui précèdent la fin de l'opération de cuisson, une opération de pré-diagnostic selon laquelle on isole la chambre du gonflage (11) en commandant la fermeture de la vanne d'admission (21) et l'on surveille la pression interne régnant dans la membrane de cuisson afin de pouvoir détecter une baisse anormale de la pression interne indicative d'une fuite potentielle, et, en cas de détection d'une telle baisse anormale de la pression interne indicative d'une fuite potentielle durant l'opération de cuisson en cours, on conditionne le démarrage de l'opération de cuisson suivante à la réalisation d'une étape (S200) de test.

14. Installation (1) de cuisson permettant de cuire des bandages (2), ladite installation comprenant :
- un moule (3) qui est agencé pour adopter alternativement une configuration de fermeture, dans laquelle la paroi interne (3_in) dudit moule délimite une cavité de moulage correspondant à l'empreinte en négatif du bandage (2) et permet une opération de cuisson dudit bandage, et une configuration d'ouverture permettant d'extraire, après l'opération de cuisson, un bandage (2) cuit dudit moule et de le remplacer par un bandage (2) cru,
- une membrane de cuisson (10) dont la surface interne (10_in) délimite une chambre de gonflage (11) permettant de gonfler la membrane de cuisson, et dont la surface externe (10_out) est agencée pour, durant l'opération de cuisson, et sous l'action d'une pression dite « pression de cuisson » (P_cur) qui est appliquée dans la chambre de gonflage (11), venir en appui contre la surface interne (2_in) du bandage afin de presser le bandage (2) contre la paroi interne (3_in) du moule (3),
- un circuit de gonflage (20) qui comprend au moins une vanne d'admission (21) permettant d'introduire à l'intérieur de la membrane de cuisson (10), dans la chambre de gonflage (11), un fluide de gonflage sous pression afin de gonfler la membrane de cuisson (10),
- un dispositif de mesure de pression (25) agencé pour mesurer la pression dite « pression interne », qui règne à l'intérieur de la membrane de cuisson (10), dans la chambre de gonflage (11),
ladite installation étant **caractérisé en ce qu'**elle comprend une unité de commande (27) agencée pour faire exécuter à ladite installation :
- une étape (S100) d'ouverture du moule (3), au cours de laquelle, après avoir dégonflé la membrane de cuisson (10), on place le moule (3) en configuration d'ouverture,
- une étape (S200) de test conformément au procédé de détection de fuite selon l'une quelconque des revendications précédentes.

## Patentansprüche

1. Lecknachweisverfahren zum Nachweisen eines Lecks innerhalb einer Wärmebehandlungsanlage (1) zur Wärmebehandlung von Reifen (2), wobei die Anlage Folgendes umfasst:
- eine Form (3), die derart angeordnet ist, dass sie wahlweise eine geschlossene Konfiguration, in welcher die Innenwand (3_in) der Form (3), die dem Negativabdruck des Reifens (2) entspricht, einen Formgebungshohlraum begrenzt und einen Vorgang zur Wärmebehandlung des Reifens ermöglicht, und eine geöffnete Konfiguration annehmen kann, welche es ermöglicht, einen wärmebehandelten Reifen nach dem Wärmebehandlungsvorgang aus der Form (3) zu entnehmen und durch einen Rohreifen zu ersetzen,
- eine Wärmebehandlungsmembran (10), deren Innenfläche (10_in) eine Aufblaskammer (11) begrenzt, welche das Aufblasen der Wärmebehandlungsmembran (10) ermöglicht, und deren Außenfläche (10_out) derart angeordnet ist, dass sie während des Wärmebehandlungsvorgangs und unter Einwirkung eines Drucks, der als "Wärmebehandlungsdruck" (P_cur) bezeichnet wird und in der Aufblaskammer (11) zur Anwendung gebracht wird, an der Innenfläche (2_in) des Reifens zur Anlage kommen, um den Reifen (2) gegen die Innenwand (3_in) der Form zu drücken,
- einen Aufblaskreislauf (20), der mindestens ein Einlassventil (21) umfasst, welches es ermöglicht, im Inneren der Wärmebehandlungsmembran (10) ein unter Druck stehendes Aufblasfluid in der Aufblaskammer (11) einzuleiten, um die Wärmebehandlungsmembran (10) aufzublasen,
- eine Druckmesseinrichtung (25), die derart angeordnet ist, dass sie den Druck misst, welcher im Inneren der Wärmebehandlungsmembran (10) in der Aufblaskammer (11) herrscht, wobei dieser als "Innendruck" bezeichnet wird,
wobei das Verfahren **dadurch gekennzeichnet ist, dass** es Folgendes umfasst:
- einen Schritt (S100) des Öffnens der Form, im Laufe dessen die Form (3) nach dem Abblasen der Wärmebehandlungsmembran (10) in die geöffnete Konfiguration gebracht wird,
- einen Prüfschritt (S200), der Folgendes umfasst:
einen Teilschritt (S201) zum erneuten teilweisen Aufblasen, im Laufe dessen, während sich die Form (3) in der geöffneten Konfiguration befindet, das Einlassventil (21) geöffnet wird, um Aufblasfluid in die Aufblaskammer (11) einzuleiten, sodass sich der Innendruck erhöht, welcher in der Aufblaskammer (11) herrscht, und dadurch die Wärmebehandlungsmembran (10) wieder aufgeblasen wird, wobei der Innendruck, welcher in der Aufblaskammer herrscht, mittels der Druckmessvorrichtung (25) gemessen wird,
anschließend einen Stabilisierungsteilschritt (S202), der ausgelöst wird, wenn der Innendruck, welcher in der Aufblaskammer (11) herrscht, einen vorbestimmten Schwellenwert erreicht, der als Prüfdruck (P_Test) bezeichnet wird, wobei er derart gewählt wird, dass er niedriger als der Wärmebehandlungsdruck (P_cur) ist, und gemäß dem zum einen die Aufblaskammer (11) durch Ansteuern eines Schließvorgangs des Einlassventils (21) isoliert wird und zum anderen eine Verzögerung von einer vorbestimmten Dauer (d_202), die als "Verzögerungszeit" (d_202) bezeichnet wird, zur Anwendung gebracht wird, und nach Ablauf dieser Verzögerungszeit (d_202) der Wert gemessen wird, welcher als "Referenzdruck" (P_ref) des in der Aufblaskammer (11) herrschenden Innendrucks bezeichnet wird,
anschließend einen Beobachtungsteilschritt (S203), im Laufe dessen beobachtet wird, wie sich der in der Aufblaskammer (11) herrschende Innendruck über einen vorbestimmten Zeitraum ändert, welcher als "Beobachtungszeit" (d_203) bezeichnet wird, um eine Änderung des Innendrucks gegenüber dem Referenzdruck (P_ref) zu erkennen, wie sie repräsentativ für das Vorliegen eines Lecks wäre.

2. Verfahren nach Anspruch 1, **dadurch gekennzeichnet, dass** die Verzögerungszeit (d_202) derart ausgewählt ist, dass sie einerseits mindestens 2 Sekunden, vorzugsweise mindestens 3 Sekunden, stärker bevorzugt mindestens 4 Sekunden als unterem Grenzwert und andererseits höchstens 60 Sekunden, vorzugsweise höchstens 30 Sekunden, stärker bevorzugt höchstens 20 Sekunden oder sogar höchstens 10 Sekunden als oberem Grenzwert entspricht, wobei sie beispielsweise gleich 5 Sekunden ist.

3. Verfahren nach Anspruch 1 oder 2, **dadurch gekennzeichnet, dass** über die Beobachtungszeit (d_203) eine Abnahme des Innendrucks festgestellt wird, wobei die Abnahme eine Amplitude aufweist, die als Absolutwert gegenüber dem Referenzdruck (P_ref) größer als ein vorbestimmter Schwellenwert ist, welcher als "Abfallschwellenwert" (P_drop_thresh) bezeichnet wird, woraufhin auf das Vorliegen eines Lecks der Wärmebehandlungsmembran (10) geschlossen wird.

4. Verfahren nach Anspruch 3, **dadurch gekennzeichnet, dass** der Abfallschwellenwert (P_drop_thresh) als Absolutwert zwischen 10 mbar und 150 mbar liegt, wobei er vorzugsweise gleich 10 mbar ist.

5. Verfahren nach einem der Ansprüche 1 bis 4, **dadurch gekennzeichnet, dass** über die Beobachtungszeit (d_203) ein Anstieg des Innendrucks gegenüber dem Referenzdruck (P_ref) festgestellt wird und woraufhin auf das Vorliegen eines Lecks des Einlassventils (21) geschlossen wird.

6. Verfahren nach einem der vorhergehenden Ansprüche, **dadurch gekennzeichnet, dass** die festgelegte Beobachtungszeit (d_203) einerseits mindestens 5 Sekunden, vorzugsweise mindestens 10 Sekunden, stärker bevorzugt mindestens 20 Sekunden als unterem Grenzwert und andererseits höchstens 5 Minuten, vorzugsweise höchstens 3 Minuten, stärker bevorzugt höchstens 60 Sekunden oder sogar höchstens 45 Sekunden als oberem Grenzwert entspricht, wobei sie beispielsweise gleich 30 Sekunden ist.

7. Verfahren nach einem der vorhergehenden Ansprüche, **dadurch gekennzeichnet, dass** während des Beobachtungsteilschritts (S203) der Innendruck gemessen wird, welcher als "Restdruck" (P_resid) bezeichnet wird und nach Ablauf (t3) der Beobachtungszeit (d_203) in der Aufblaskammer (11) herrscht, und die Differenz zwischen diesem Restdruck (P_resid) und dem Referenzdruck (P_ref) berechnet wird, um das Vorzeichen und die Amplitude der festgestellten Änderung zu bestimmen.

8. Verfahren nach einem der vorhergehenden Ansprüche, **dadurch gekennzeichnet, dass** als Aufblasfluid für den Prüfschritt (S200) ein trockenes Gas verwendet wird, das heißt ein Gas, welches beim Erreichen des Einlassventils (21) eine spezifische Feuchtigkeit aufweist, die höchstens 0,005 kg/kg beträgt, vorzugsweise ein Gas, das mehr als 99,8 % an reinem Distickstoff enthält.

9. Verfahren nach einem der vorhergehenden Ansprüche, **dadurch gekennzeichnet, dass** der Prüfdruck (P_Test), der als Schwellenwert zum Auslösen des Stabilisierungsteilschritts (S202) verwendet wird, einerseits mindestens 30 mbar, vorzugsweise mindestens 50 mbar, stärker bevorzugt mindestens 80 mbar als unterem Grenzwert und andererseits höchstens 1 bar, vorzugsweise höchstens 350 mbar, stärker bevorzugt höchstens 200 mbar und noch stärker bevorzugt höchstens 130 mbar als oberem Grenzwert entspricht.

10. Verfahren nach einem der vorhergehenden Ansprüche, **dadurch gekennzeichnet, dass** der Prüfdruck (P_test) im Bereich von 80 mbar bis 130 mbar liegt.

11. Verfahren nach einem der vorhergehenden Ansprüche, **dadurch gekennzeichnet, dass** der Prüfschritt (S200) gemäß einer vorbestimmten Frequenz zur Anwendung gebracht wird, die als "Prüffrequenz" bezeichnet wird, wobei gemäß dieser vorgesehen ist, zwei aufeinanderfolgende Prüfschritte (S200), die an ein und derselben Wärmebehandlungsmembran (10) vorgenommen werden, um eine Mehrzahl an Wärmebehandlungsvorgängen zu beabstanden, welche mit ebendieser Wärmebehandlungsmembran (10) durchgeführt werden, sodass der Einfluss der Dauer des Prüfschritts (S200) auf die Nutzungszeit der Anlage (1) verringert wird, indem die Dauer des Prüfschritts (S200) im Durchschnitt über die Anzahl der Wärmebehandlungsvorgänge der mehreren Wärmebehandlungsvorgänge verteilt wird, wobei die Prüffrequenz vorzugsweise derart gewählt wird, dass ein Prüfschritt (S200) alle fünf, oder mindestens fünf, Wärmebehandlungsschritte, vorzugsweise alle zehn, oder mindestens zehn, Wärmebehandlungsvorgänge oder sogar alle fünfzig, oder mindestens fünfzig, Wärmebehandlungsvorgänge durchgeführt wird.

12. Verfahren nach Anspruch 11, **dadurch gekennzeichnet, dass** die Prüffrequenz mit der Anzahl der Wärmebehandlungsvorgänge, die mit ebendieser betreffenden Wärmebehandlungsmembran (10) durchgeführt werden, nach einem vorgegebenen Planungsschema zunimmt, sodass die Wärmebehandlungsmembran (10) mit zunehmender Anzahl von Wärmebehandlungsvorgängen, welche mit der Wärmebehandlungsmembran durchgeführt wurden, häufiger einem Prüfschritt (S200) unterzogen wird.

13. Verfahren nach einem der vorhergehenden Ansprüche, **dadurch gekennzeichnet, dass** in maskierter Zeit, und zwar während eines Wärmebehandlungsvorgangs, vorzugsweise während jedes Wärmebehandlungsvorgangs, wobei sich die Form (3) in der geschlossenen Konfiguration befindet und die Wärmebehandlungsmembran (10) mit dem Wärmebehandlungsdruck (P_cur) beaufschlagt wird, beispielsweise innerhalb von zwei bis vier Minuten, bevor der Wärmebehandlungsvorgang abgeschlossen ist, ein Vordiagnosevorgang durchgeführt wird, gemäß welchem die Aufblaskammer (11) isoliert wird, indem ein Schließvorgang des Einlassventils (21) angesteuert wird und der in der Wärmebehandlungsmembran herrschende Innendruck überwacht wird, um eine anormale Abnahme des Innendrucks nachweisen zu können, die auf ein mögliches Leck hinweist, und im Falle des Nachweises einer solchen anormale Abnahme des Innendrucks, die auf ein mögliches Leck während des laufenden Wärmebehandlungsvorgangs hinweist, der nächste Wärmebehandlungsvorgang nur dann begonnen wird, wenn ein Prüfschritt (S200) durchgeführt wurde.

14. Wärmebehandlungsanlage (1) zur Wärmebehandlung von Reifen (2), wobei die Anlage Folgendes umfasst:
- eine Form (3), die derart angeordnet ist, dass sie wahlweise eine geschlossene Konfiguration, in welcher die Innenwand (3_in) der Form einen Formgebungshohlraum begrenzt, der dem Negativabdruck des Reifens (2) entspricht, und einen Vorgang zur Wärmebehandlung des Reifens ermöglicht, und eine geöffnete Konfiguration annehmen kann, welche es ermöglicht, einen wärmebehandelten Reifen (2) nach dem Wärmebehandlungsvorgang aus der Form zu entnehmen und durch einen Rohreifen (2) zu ersetzen,
- eine Wärmebehandlungsmembran (10), deren Innenfläche (10_in) eine Aufblaskammer (11) begrenzt, welche das Aufblasen der Wärmebehandlungsmembran ermöglicht, und deren Außenfläche (10_out) derart angeordnet ist, dass sie während des Wärmebehandlungsvorgangs und unter Einwirkung eines Drucks, der als "Wärmebehandlungsdruck" (P_cur) bezeichnet wird und in der Aufblaskammer (11) zur Anwendung gebracht wird, an der Innenfläche (2_in) des Reifens zur Anlage kommen, um den Reifen (2) gegen die Innenwand (3_in) der Form (3) zu drücken,
- einen Aufblaskreislauf (20), der mindestens ein Einlassventil (21) umfasst, welches es ermöglicht, im Inneren der Wärmebehandlungsmembran (10) ein unter Druck stehendes Aufblasfluid in der Aufblaskammer (11) einzuleiten, um die Wärmebehandlungsmembran (10) aufzublasen,
- eine Druckmessvorrichtung (25), die derart angeordnet ist, dass sie den Druck misst, welcher im Inneren der Wärmebehandlungsmembran (10) in der Aufblaskammer (11) herrscht, wobei dieser als "Innendruck" bezeichnet wird,
wobei die Anlage **dadurch gekennzeichnet ist, dass** sie eine Steuereinheit (27) umfasst, die dafür eingerichtet ist, die Anlage zu veranlassen, Folgendes auszuführen:
- einen Schritt (S100) des Öffnens der Form (3), im Laufe dessen die Form (3) nach dem Abblasen der Wärmebehandlungsmembran (10) in die geöffnete Konfiguration gebracht wird,
- einen Prüfschritt (S200) gemäß dem Lecknachweisverfahren nach einem beliebigen der vorhergehenden Ansprüche.

## Claims

1. Leak detection method for detecting a leak within a curing facility (1) for curing tyres (2), said facility comprising:
- a mould (3), which is arranged to alternately assume a closed configuration, in which the inner wall (3_in) of said mould (3), which corresponds to the negative impression of the tyre (2), delimits a moulding cavity and allows an operation for curing said tyre, and an open configuration, which allows a cured tyre to be extracted from said mould (3) after the curing operation and to be replaced with a green tyre;
- a curing membrane (10), the inner surface (10_in) of which delimits an inflation chamber (11) for inflating the curing membrane (10), and the outer surface (10_out) of which is arranged, during the curing operation and under the action of a pressure, called "curing pressure" (P_cur), that is applied in the inflation chamber (11), to come into abutment against the inner surface (2_in) of the tyre in order to press the tyre (2) against the inner wall (3_in) of the mould;
- an inflation circuit (20), which comprises at least one intake valve (21) for introducing a pressurised inflation fluid into the curing membrane (10), in the inflation chamber (11), in order to inflate the curing membrane (10);
- a pressure measurement device (25) arranged to measure the pressure, called "internal pressure", that prevails inside the curing membrane (10), in the inflation chamber (11); said method being **characterized in that** it comprises:
- a step (S100) of opening the mould, during which step, after having deflated the curing membrane (10), the mould (3) is placed in the open configuration;
- a testing step (S200), which comprises:
a partial reinflation sub-step (S201), during which, while the mould (3) is in the open configuration, the opening of the intake valve (21) is controlled in order to introduce inflation fluid into the inflation chamber (11) so as to increase the internal pressure that prevails in said inflation chamber (11) and thus cause the curing membrane (10) to reinflate, while measuring said internal pressure prevailing in said inflation chamber by means of the pressure measurement device (25);
then a stabilisation sub-step (S202), which is triggered when the internal pressure prevailing in the inflation chamber (11) reaches a predetermined threshold, called "test pressure" (P_test), which is selected so as to be lower than the curing pressure (P_cur), and according to which, on the one hand, the inflation chamber (11) is isolated by controlling the closure of the intake valve (21), and, on the other hand, a time delay with a predetermined duration (d_202), called "time delay period" (d_202) is applied, and, at the end of said time delay (d_202), the value, called "reference pressure" (P_ref), of the internal pressure that prevails in the inflation chamber (11) is measured;
then an observation sub-step (S203), which involves observing how the internal pressure prevailing in the inflation chamber (11) evolves over a predetermined duration, called "observation period" (d_203), in order to identify an evolution of the internal pressure, relative to the reference pressure (P ref), which represents a leakage situation.

2. Method according to Claim 1, **characterised in that** the time delay period (d_202) is selected, on the one hand, so as to be equal to or greater than 2 seconds, preferably equal to or greater than 3 seconds, more preferably equal to or greater than 4 seconds, for the low limit value, and, on the other hand, so as to be less than or equal to 60 seconds, preferably less than or equal to 30 seconds, more preferably less than or equal to 20 seconds, or even less than or equal to 10 seconds, for the high limit value, for example, equal to 5 seconds.

3. Method according to Claim 1 or 2, **characterised in that**, over the observation period (d_203), a reduction in the internal pressure is observed, with said reduction being of an amplitude, as an absolute value relative to the reference pressure (P_ref), that is greater than a predetermined threshold, called "drop threshold" (P_drop_thresh), and a leakage situation of the curing membrane (10) is inferred.

4. Method according to Claim 3, **characterised in that** the drop threshold (P_drop_thresh) ranges, as an absolute value, between 10 mbar and 150 mbar, preferably equal to 10 mbar.

5. Method according to any of Claims 1 to 4, **characterised in that**, over the observation period (d_203), an increase in the internal pressure is observed relative to the reference pressure (P_ref), and a leakage situation of the intake valve (21) is inferred.

6. Method according to any of the preceding claims, **characterised in that** the imparted observation period (d_203) is, on the one hand, equal to or greater than 5 seconds, preferably equal to or greater than 10 seconds, more preferably equal to or greater than 20 seconds, for the low limit value, and, on the other hand, less than or equal to 5 minutes, preferably less than or equal to 3 minutes, more preferably less than or equal to 60 seconds, or even less than or equal to 45 seconds, for the high limit value, for example, equal to 30 seconds.

7. Method according to any of the preceding claims, **characterised in that** during the observation sub-step (S203), the internal pressure called "residual pressure" (P_resid) that prevails in the inflation chamber (11) at the end (t3) of the observation period (d_203) is measured, and the difference between said residual pressure (P_resid) and the reference pressure (P_ref) is computed in order to determine the sign and the amplitude of the observed evolution.

8. Method according to any of the preceding claims, **characterised in that** the inflation fluid used for the testing step (S200) is a dry gas, i.e., a gas that has, when it reaches the intake valve (21), a specific humidity that is less than or equal to 0.005 kg/kg, preferably a gas containing more than 99.8 % pure dinitrogen.

9. Method according to any of the preceding claims, **characterised in that** the test pressure (P_test) that is used as a threshold for triggering the stabilisation sub-step (S202) is, on the one hand, equal to or greater than 30 mbar, preferably equal to or greater than 50 mbar, more preferably equal to or greater than 80 mbar, for the low limit value, and, on the other hand, less than or equal to 1 bar, preferably less than or equal to 350 mbar, more preferably less than or equal to 200 mbar, and even more preferably less than or equal to 130 mbar, for the high limit value.

10. Method according to any of the preceding claims, **characterised in that** the test pressure (P_test) ranges between 80 mbar and 130 mbar.

11. Method according to any of the preceding claims, **characterised in that** the testing step (S200) is applied at a predetermined frequency, called "testing frequency", which involves spacing apart two consecutive testing steps (S200), performed on the same curing membrane (10), of a plurality of curing operations, performed with said same curing membrane (10), so that the impact of the duration of the testing step (S200) on the useful time of the facility (1) is reduced by averaging this duration of the testing step (S200) over the number of curing operations of said plurality of curing operations, with said testing frequency preferably being selected so that a testing step (S200) is performed every five, or at least five, curing steps, preferably every ten, or at least ten, curing operations, or even every fifty, or at least fifty, curing operations.

12. Method according to claim 11, **characterised in that** the testing frequency increases with the number of curing operations performed by the same considered curing membrane (10), according to a predetermined scheduling rule, so that said curing membrane (10) is subjected to a testing step (S200) even more frequently as the number of curing operations that said curing membrane has performed increases.

13. Method according to any of the preceding claims, **characterised in that**, concurrently during a curing operation, and preferably during each curing operation, while the mould (3) is in the closed configuration and while the curing membrane (10) is subjected to the curing pressure (P_cur), for example, in the two to four minutes preceding the end of the curing operation, a pre-diagnosis operation is performed whereby the inflation chamber (11) is isolated by controlling the closure of the intake valve (21) and the internal pressure prevailing in the curing membrane is monitored in order to be able to detect an abnormal reduction in the internal pressure indicative of a potential leak, and, in the event of the detection of such an abnormal reduction in the internal pressure indicative of a potential leak during the ongoing curing operation, the start of the next curing operation is submitted to the condition of completing a testing step (S200).

14. Curing facility (1) for curing tyres (2), said facility comprising:
- a mould (3), which is arranged to alternately assume a closed configuration, in which the inner wall (3_in) of said mould delimits a moulding cavity corresponding to the negative impression of the tyre (2) and allows an operation for curing said tyre, and an open configuration, which allows a cured tyre (2) to be extracted from said mould after the curing operation and to be replaced with a green tyre (2);
- a curing membrane (10), the inner surface (10_in) of which delimits an inflation chamber (11) for inflating the curing membrane, and the outer surface (10_out) of which is arranged, during the curing operation and under the action of a pressure, called "curing pressure" (P_cur), that is applied in the inflation chamber (11), to come into abutment against the inner surface (2_in) of the tyre in order to press the tyre (2) against the inner wall (3_in) of the mould (3);
- an inflation circuit (20), which comprises at least one intake valve (21) for introducing a pressurised inflation fluid into the curing membrane (10), in the inflation chamber (11), in order to inflate the curing membrane (10);
- a pressure measurement device (25) arranged to measure the pressure, called "internal pressure", that prevails inside the curing membrane (10), in the inflation chamber (11); said facility being **characterised in that** it comprises a control unit (27) arranged to cause said facility to execute:
- a step (S100) of opening the mould (3), during which step, after having deflated the curing membrane (10), the mould (3) is placed in the open configuration;
- a step (S200) of testing in accordance with the leak detection method according to any one of the preceding claims.
